(19)

Europäisches Patentamt

European Patent Office

Office européen des brevets

(11) **EP 4 524 688 A1**

(12) **EUROPEAN PATENT APPLICATION**

(43) Date of publication:
**19.03.2025 Bulletin 2025/12**

(21) Application number: **24198734.6**

(22) Date of filing: **05.09.2024**

(51) International Patent Classification (IPC):
*G06F 3/01* *(2006.01)*

(52) Cooperative Patent Classification (CPC):
**G06F 3/011**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.09.2023 US 202363582814 P**
 **13.08.2024 US 202418803141**

(71) Applicant: **Meta Platforms Technologies, LLC Menlo Park, CA 94025 (US)**

(72) Inventors:
• **Sears, Jasmine Soria**
 **Menlo Park, 94025 (US)**
• **Elazhary, Tamer**
 **Menlo Park, 94025 (US)**
• **Wong, Jeffrey Hung**
 **Menlo Park, 94025 (US)**
• **Ding, Yitian**
 **Menlo Park, 94025 (US)**

(74) Representative: **Murgitroyd & Company**
 **165-169 Scotland Street**
 **Glasgow G5 8PL (GB)**

(54) **DISPARITY SENSOR FOR CLOSED-LOOP ACTIVE DIMMING CONTROL, AND SYSTEMS AND METHODS OF USE THEREOF**

(57) A method of active-dimming control for augmented-reality glasses. The method includes, while a user is wearing augmented-reality glasses, obtaining a first set of light information measured via a first sensor on the augmented reality glasses which is positioned to receive light after it travels through a dimmable element of the augmented-reality glasses. The method further includes obtaining a second set of light information measured via a second sensor on the augmented reality glasses positioned to receive light that has not travelled through the dimmable element of the augmented-reality glasses. The method further includes electronically adjusting a dimming level of the dimmable element based on a comparison between the first set and second set of light information.

Figure 1A

EP 4 524 688 A1

## Description

## TECHNICAL FIELD

This relates generally to artificial-reality glasses, including, but not limited to, techniques for dynamically adjusting brightness levels of the artificial-reality glasses based on a comparison of external light received by sensors integrated with the artificial-reality glasses and current display brightness.

## RELATED APPLICATIONS

This application claims priority to United States Provisional Application No. 63/582,814, filed September 14, 2023, titled "Disparity Sensor For Closed-Loop Active Dimming Control, And Systems And Methods Of Use Thereof".

## BACKGROUND

Users of artificial-reality glasses face the challenge of having properly dimmed lenses and displays based on constantly changing environments due to environmental factors such as sunlight, temperature, and/or change in environment (e.g., a user moving between outdoor and indoor environments). Current technology consists of passively dimming lenses, which faces drastic variability due to temperature and inconsistent environmental factors. For example, passive dimming technology that relies on temperature can have variability up to 25%. The variability in the passive dimming technology creates inconsistent dimming practices and can be very frustrating to a user, as the dimming technology can cause lenses to dim when they are not supposed to. Accordingly, there is a need for more accurate lens-dimming technology that properly dims lenses of artificial-reality glasses under appropriate conditions.

As such, there is a need to address one or more of the above-identified challenges. A brief summary of solutions to the issues noted above is described below.

## SUMMARY

The methods, systems, and devices described herein provide active dimming techniques for lenses of a head-wearable device. The active dimming techniques disclosed herein improve the visibility of artificial-reality content presented to the user via a display of a head-wearable device. Additionally, the active dimming techniques disclosed herein improve user comfort by dimming lenses of a head-wearable device to appropriate levels across different environments and/or environmental conditions. The methods, systems, and devices described herein provide a cost-effective, low-power, and lightweight solution for active dimming control. Additionally, the methods, systems, and devices are configured to operate as a closed-loop solution without the dedicated hardware required by existing closed-loop dimming technologies (which can require a calibrated light source and sensor, or charge level measurement circuit).

The invention provides a non-transitory computer-readable storage medium, a method of active-dimming control for augmented-reality glasses and a head-wearable device as defined in the appended claims.

In accordance with a first aspect, there is provided a non-transitory computer-readable storage medium comprising instructions that, when executed by one or more processors of a head-wearable device, cause the head-wearable device to cause the performance of:

    while a user is wearing augmented-reality glasses:

        obtaining first light information measured via a first sensor positioned to receive light after it travels through a dimmable element of the augmented-reality glasses;
        obtaining second light information measured via a second sensor positioned to receive light that has not travelled through the dimmable element of the augmented-reality glasses; and
        actively adjusting a dimming level of the dimmable element based on a comparison between the first and second light information.

The dimmable element may be a first dimmable element associated with a first lens of the augmented-reality glasses for a first eye of the user;

    the augmented-reality glasses may also comprise a second dimmable element associated with a second lens of the augmented-reality glasses for a second eye of the user; and
    actively adjusting may comprise electronically adjusting the dimming level only for the first dimmable element.

The actively adjusting may comprise electronically adjusting the first dimmable element to a first dimming level and the second dimmable element to a second dimming level, distinct from the first dimming level.

The instructions that, when executed by the head-wearable device, may also cause the head-wearable device to:
before actively adjusting the dimming level:

    in accordance with a determination that artificial-reality content is being presented via the first lens, determine that the first dimmable element requires a dimming-level adjustment to visibly present the artificial-reality content at the first lens;
    wherein the actively adjusting the dimming level may be performed for the first dimmable element in response to the determination that the first dimmable element requires a dimming-level adjustment to visibly present the artificial-reality content at the first lens.

The dimmable element may comprise (i) a first dimmable element associated with a first lens of the augmented-reality glasses for a first eye of the user and (ii) a second dimmable element associated with a second lens of the augmented-reality glasses for a second eye of the user, and the actively adjusting may occur substantially simultaneously for both of the first and second dimmable elements.

The actively adjusting the dimming level may occur in response to detecting a trigger condition indicating that the dimmable element requires an adjustment to the dimming level.

The trigger condition may be determined to be satisfied when an additive contrast ratio for the augmented-reality glasses falls below a threshold amount.

The augmented-reality glasses may comprise a dimmable element positioned farther away from the user compared to a display-presentation element of the augmented-reality glasses.

The first sensor may be a disparity sensor configured to output first light information by comparing light from one or more waveguides.

In accordance with a second aspect, there is provided a method of active dimming control for augmented-reality glasses, while a user is wearing augmented-reality glasses. The method comprises obtaining first light information measured via a first sensor positioned to receive light after it travels through a dimmable element of the augmented-reality glasses, and obtaining second light information measured via a second sensor positioned to receive light that has not travelled through the dimmable element of the augmented-reality glasses. The method further comprises actively (electronically) adjusting a dimming level of the dimmable element based on a comparison between the first and second light information.

The dimmable element may be a first dimmable element associated with a first lens of the augmented-reality glasses for a first eye of the user;

the augmented-reality glasses may also comprise a second dimmable element associated with a second lens of the augmented-reality glasses for a second eye of the user; and actively adjusting may comprise electronically adjusting the dimming level only for the first dimmable element.

The actively adjusting may comprise electronically adjusting the first dimmable element to a first dimming level and the second dimmable element to a second dimming level, distinct from the first dimming level.

The method may further comprise:

before actively adjusting the dimming level in accordance with a determination that artificial-reality content is being presented via the first lens, determining that the first dimmable element requires a dimming-level adjustment to allow for proper viewing of the artificial-reality content;

wherein the actively adjusting the dimming level may be performed for the first dimmable element in response to the determining that the first dimmable element requires a dimming-level adjustment to allow for proper viewing of the artificial-reality content.

The dimmable element may comprise (i) a first dimmable element associated with a first lens of the augmented-reality glasses for a first eye of the user and (ii) a second dimmable element associated with a second lens of the augmented-reality glasses for a second eye of the user, and the actively adjusting may occur substantially simultaneously for both of the first and second dimmable elements.

The actively adjusting the dimming level may occur in response to detecting a trigger condition indicating that the dimmable element requires an adjustment to the dimming level.

The trigger condition may be determined to be satisfied when an additive contrast ratio for the augmented-reality glasses falls below a threshold amount.

The augmented-reality glasses may comprise a dimmable element positioned farther away from the user compared to a display-presentation element of the augmented-reality glasses.

The first sensor may be a disparity sensor configured to output first light information by comparing light from one or more waveguides.

In accordance with a third aspect, there is provided a head-wearable device, comprising:

one or more sensors;
one or more imaging devices;
two lenses;
memory, comprising instructions for performing one or more operations; and
one or more processors configured to execute the instructions to cause the performance of:
while a user is wearing augmented-reality glasses:

obtaining first light information measured via a first sensor of the one or more sensors positioned to receive light after it travels through a dimmable element of the augmented-reality glasses;
obtaining second light information measured via a second sensor of the one or more sensors positioned to receive light that has not travelled through the dimmable element of the augmented-reality glasses; and
actively adjusting a dimming level of the dimmable element based on a comparison between the first and second light information.

The dimmable element may be a first dimmable element associated with a first lens of the augmented-reality glasses for a first eye of the user;

the augmented-reality glasses may also comprise a second dimmable element associated with a second lens of the augmented-reality glasses for a second eye of the user; and
actively adjusting may comprise electronically adjusting the dimming level only for the first dimmable element.

It will be appreciated that any features described herein as being suitable for incorporation into one or more aspects are intended to be generalizable across any and all aspects described herein. Other aspects can be understood by those skilled in the art in light of the description, the claims and the drawings. The foregoing general description and the following detailed description are exemplary and explanatory only and are not restrictive of the claims.

The features and advantages described in the specification are not necessarily all-inclusive and, in particular, certain additional features and advantages will be apparent to one of ordinary skill in the art in view of the drawings, specification, and claims. Moreover, it should be noted that the language used in the specification has been principally selected for readability and instructional purposes.

Having summarized the above example aspects, a brief description of the drawings will now be presented.

## BRIEF DESCRIPTION OF THE DRAWINGS

For a better understanding of the various described embodiments, reference should be made to the Detailed Description below in conjunction with the following drawings in which like reference numerals refer to corresponding parts throughout the figures.

Figures 1A-1B illustrate at least two lenses of a head-wearable device that are configured to actively dim, in accordance with some embodiments.

Figures 2A-2D illustrate lenses of a head-wearable device dimmed independent of each other, in accordance with some embodiments.

Figures 3A-3C illustrate one or more sensors integrated or coupled with artificial-reality glasses, in accordance with some embodiments.

Figure 4 illustrates an example method for determining a dimming level for a lens based on sensor data obtained by a disparity sensor and/or image data captured by an imaging sensor, in accordance with some embodiments.

Figure 5 illustrates a flow chart of a method of active dimming control for augmented-reality glasses, in accordance with some embodiments.

Figures 6A and 6B illustrate example artificial-reality systems, in accordance with some embodiments.

Figures 7A and 7B illustrate an example wrist-wearable device 700, in accordance with some embodiments.

Figures 8A-8C show example head-wearable devices, in accordance with some embodiments.

Figures 9A and 9B illustrate an example handheld intermediary processing device, in accordance with some embodiments.

In accordance with common practice, the various features illustrated in the drawings may not be drawn to scale. Accordingly, the dimensions of the various features may be arbitrarily expanded or reduced for clarity. In addition, some of the drawings may not depict all of the components of a given system, method, or device. Finally, like reference numerals may be used to denote like features throughout the specification and figures.

## DETAILED DESCRIPTION

Numerous details are described herein to provide a thorough understanding of the example embodiments illustrated in the accompanying drawings. However, some embodiments may be practiced without many of the specific details, and the scope of the claims is only limited by those features and aspects specifically recited in the claims. Furthermore, well-known processes, components, and materials have not necessarily been described in exhaustive detail so as to avoid obscuring pertinent aspects of the embodiments described herein.

Embodiments of this disclosure can include or be implemented in conjunction with several types or embodiments of artificial-reality systems. Artificial reality (AR), as described herein, is any superimposed functionality and/or sensory-detectable presentation provided by an artificial-reality system within a user's physical surroundings. Such artificial realities can include and/or represent virtual reality (VR), augmented reality, mixed artificial reality (MAR), or some combination and/or variation of one of these. For example, a user can perform a swiping in-air hand gesture to cause a song to be skipped by a song-providing API providing playback at, for example, a home speaker. An AR environment, as described herein, includes, but is not limited to, VR environments (including non-immersive, semi-immersive, and fully immersive VR environments); augmented-reality environments (including marker-based augmented-reality environments, markerless augmented-reality environments, location-based augmented-reality environments, and projection-based augmented-reality environments); hybrid reality; and other types of mixed-reality environments.

Artificial-reality content can include completely generated content or generated content combined with captured (e.g., real-world) content. The artificial-reality content can include video, audio, haptic events, or some combination thereof, any of which can be presented in a single channel or in multiple channels (such as stereo-video that produces a three-dimensional effect to a viewer). Additionally, in some embodiments, artificial reality can also be associated with applications, products, accessories, services, or some combination thereof, which are used, for example, to create content in an artificial reality and/or are otherwise used in (e.g., to perform activities in) an artificial reality.

A hand gesture, as described herein, can include an in-air gesture, a surface-contact gesture, and/or other gestures that can be detected and determined based on movements of a single hand (e.g., a one-handed gesture performed with a user's hand that is detected by one or more sensors of a wearable device (e.g., electromyography (EMG) and/or inertial measurement units (IMUs) of a wrist-wearable device) and/or detected via image data captured by an imaging device of a wearable device (e.g., a camera of a head-wearable device)) or a combination of the user's hands. In-air means, in some embodiments, that the user's hand does not contact a surface, object, or portion of an electronic device (e.g., a head-wearable device or other communicatively coupled device, such as the wrist-wearable device), in other words, the gesture is performed in open air in 3D space and without contacting a surface, an object, or an electronic device. Surface-contact gestures (contacts at a surface, object, body part of the user, or electronic device) more generally are also contemplated in which contact (or an intention to contact) is detected at a surface (e.g., a single or double finger tap on a table, on a user's hand or another finger, on the user's leg, a couch, a steering wheel). The different hand gestures disclosed herein can be detected using image data and/or sensor data (e.g., neuromuscular signals sensed by one or more biopotential sensors (e.g., EMG sensors) or other types of data from other sensors, such as proximity sensors, time-of-flight sensors, sensors of an inertial measurement unit, etc.) detected by a wearable device worn by the user and/or other electronic devices in the user's possession (e.g., smartphones, laptops, imaging devices, intermediary devices, and/or other devices described herein).

The systems and methods disclosed herein provide techniques for active dimming control for augmented-reality glasses. The active dimming control techniques disclosed herein actively dim one or more lenses of a head-wearable device to improve the presentation of AR content to a user. The systems and methods disclosed herein can use one or more sensors and/or imaging sensors of a head-wearable device to detect current dimming levels of lenses and/or adjustments that should be made to current dimming levels of lenses. The systems and methods disclosed herein provide a cost-effective, low-power consumption, and lightweight solution for active dimming control. Additional detail on the active dimming control techniques is provided below.

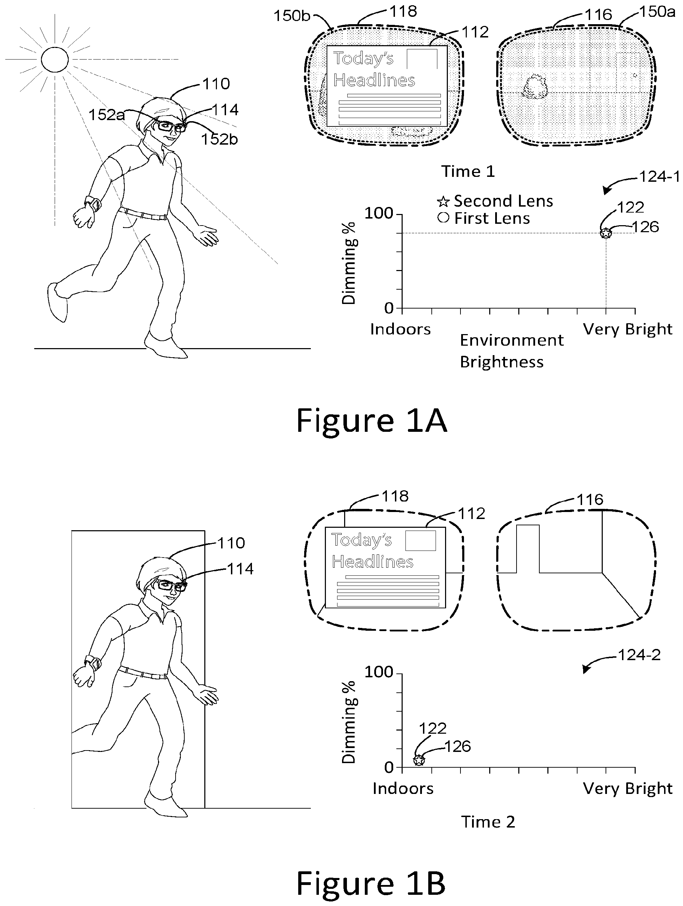

Figures 1A and 1B illustrate at least two lenses of a head-wearable device that are configured to actively dim, in accordance with some embodiments. The at least two lenses (e.g., first and/or second lenses 118 and 116 (as viewed by a user 110 wearing a head-wearable device 114)) can be actively dimmed substantially simultaneously based on sensor data (e.g., ambient light data). For example, as shown in Figures 1A and 1B, a head-wearable device 114 worn by a user 110 actively adjusts a dimming level of the first and/or second lenses 118 and 116 when the user 110 walks from outside to inside. By actively controlling a dimming level of the first and/or second lenses 118 and 116, the head-wearable device 114 makes it easier for the user 110 to view presented AR content 112. The head-wearable device 114 can present AR content 112 to the user 110 via the first and/or second lenses 118 and 116. More specifically, the head-wearable device 114 can cause the first lens 118, the second lens 116, or both to present AR content 112. For example, as shown in Figure 1A, the head-wearable device 114 presents AR content 112 to the user via the first lens 118. The first and/or second lenses 118 and 116 can present the same AR content 112 or distinct AR content 112.

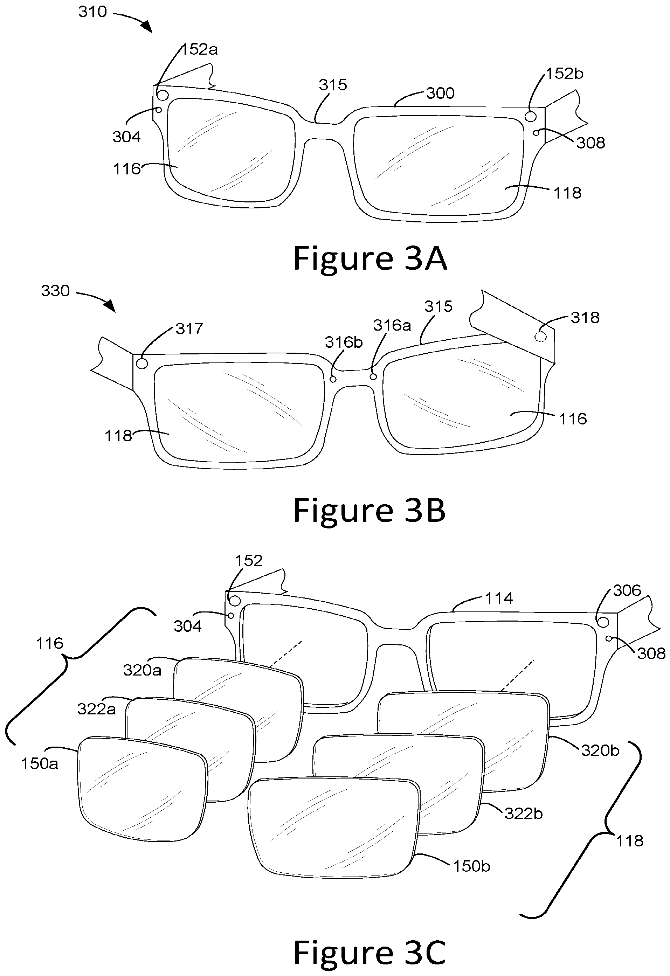

Each lens of the at least two lenses can be formed via a plurality of layers, with at least one layer including a dimmable element. For example, the first lens 118 can include at least a first layer 150b (which includes a first integrated dimmable element) and the second lens 116 can include at least another first layer 150a (which includes another first integrated dimmable element). The head-wearable device 114 can control each respective first layer to dynamically adjust a dimming level of each lens based on sensor data obtained by one or more sensors as described below. In some embodiments, the head-wearable device 114 automatically adjusts the dimming level of each lens based on the obtained sensor data. Alternatively, or in addition, in some embodiments, the user can manually adjust the dimming level of each lens (e.g., the first and second lenses 118 and 116). The respective integrated dimmable elements of the first layer 150b and the other first layer 150a can be adjusted individually or substantially simultaneously. As described in detail below in reference to Figure 3C, each plurality of layers can further include a second layer 322 (e.g., a waveguide or other display) configured to cause presentation of the AR content 112 and a third layer 320 configured to include a lens layer (e.g., conventional concave or convex lenses, Fresnel lenses, or adjustable liquid lenses), an additional display (e.g., additional waveguide), additional dimmable element, or other integrated component.

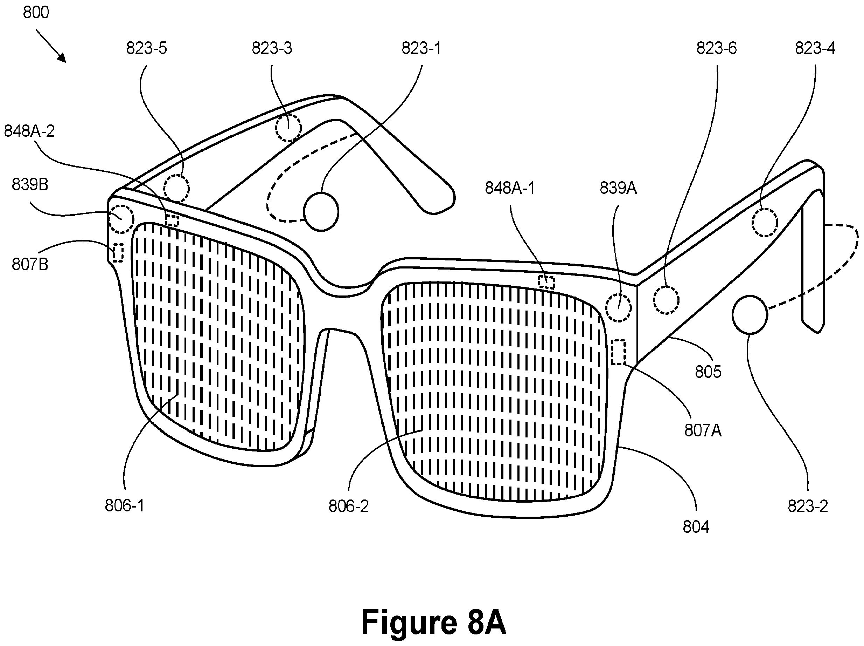

The sensor data for determining respective dimming levels of the first and/or second lenses 118 and 116 is obtained via one or more sensors of the head-wearable device 114. In some embodiments, the one or more sensors include a disparity sensor 316 (Figures 3A-3C), which is configured to compare light from each lens (e.g., light contacting or passing through a respective lens). In particular, the disparity sensor 316 is configured to measure light that passes through a first layer 150 and contacts at least the second and/or the third layer of a lens. Alternatively, or in addition, in some embodiments, the disparity sensor 316 is configured to compare ambient light (e.g., light measured before passing through a portion of a lens) to light measured after passing through a portion of a lens (e.g., light after passing through at least a first layer 150 and/or contacting at least the second and/or the third layer of a lens). In some embodiments, the disparity sensor 316 is integrated into circuitry of the head-wearable device 114 or coupled to a portion of the head-wearable device 114. The head-wearable device 114 can include a single disparity sensor 316 or multiple disparity sensors 316 (e.g., one disparity sensor 316 for each lens). The one or more sensors can also include one or more light sensors 868, IMU 829, and/or any other sensor described below in reference to Figures 8A-8C. In some embodiments, one or more sensors are associated with a respective lens. For example, the head-wearable device 114 can include a first ambient light sensor associated with the first lens 118 and a second ambient light sensor associated with the second lens 116. Alternatively, in some embodiments, a single sensor can be associated with both lenses. For example, a single ambient light sensor can be associated with the first and second lenses 118 and 116. The one or more sensors can be coupled with or integrated into a frame of head-wearable device 114 as discussed below in reference to Figures 3A-3C and 8A-8C.

The head-wearable device 114 further includes one or more imaging sensors, such as a front-facing camera, for capturing image data of the real world. In some embodiments, a front-facing camera 152 is positioned adjacent to each lens. For example, a first front-facing camera 152b can be positioned to capture image data of the real world adjacent to the first lens 118 and a second front-facing camera 152a can be positioned to capture image data of the real world adjacent to the second lens 116. In some embodiments, image data captured by the first and second front-facing cameras 152b and 152a is used in determining respective dimming levels of the first and/or second lenses 118 and 116. For example, image data captured by the first front-facing camera 152b can be compared with sensor data for the first lens 118 obtained from the disparity sensor 316, and a dimming level of the first lens can be determined based on comparison (as discussed in detail below).

Returning to Figure 1A, when the user 110 steps outside, bright light from the sun causes the head-wearable device 114, the first lens 118, and/or the second lens 116 to be dimmed (e.g., causing a tint of the lenses to be increased such that the lenses become darker and light passing through the lenses is attenuated). In some embodiments, the respective dimming levels of the first lens 118 and the second lens 116 are based on the brightness of the real-world environment. For example, as shown by chart 124-1, which shows dimming level percentages for the first lens 118 and the second lens 116 as a function of the brightness of the real-world environment at a first point in time (t1), on a bright day (e.g., between 32,000 lux to 100,000 lux as discussed below) the first lens 118 and the second lens 116 have a dimming level of about 80% (e.g., such that 80% of the light passing through the first lens 118 and the second lens 116 is attenuated). The chart 124-1 further includes a circular marker 122 indicating the current dimming level for the first lens 118 and a star marker 126 indicating the current dimming level of the second lens 116. As shown by the chart 124-1, the first and second lenses 118 and 116 are set to the same dimming level.

In some embodiments, the brightness of the real-world environment is determined based on the sensor data captured by one or more sensors of the head-wearable device 114 (e.g., light sensors 868, such as ambient light sensors). For example, an ambient light sensor can detect an amount of lux (the standard unit for the illuminance of ambient light) in a particular environment. In some embodiments, the amount of lux is used to determine the brightness of the real-world environment. For example, a very bright to bright real-world environment can be between 32,000 lux to 100,000 lux, an outdoor real-world environment with full daylight can be between 10,000 lux to 25,000 lux, an office real-world environment can be between 320 lux to 500 lux, and a bedroom real-world environment can be between 60 lux to 100 lux.

Alternatively, or in addition, in some embodiments, brightness of the real-world environment is determined based on image data captured by the one or more imaging sensors (e.g., front-facing cameras 152b and 152a). For example, the image data can be processed (e.g., pixel analysis) to detect changes in brightness within a portion of the image data. In some embodiments, the ambient light sensor can detect the number of nits (unit of brightness/luminance) in a particular environment. Nits are a unit of measurement used to quantify brightness by measuring the amount of light emitted or reflected. Higher nit values indicate a brighter screen, allowing for better visibility in well-lit environments or under direct sunlight. For example, a very bright to bright real-world environment can be between 10,600 nits to 33,400 nits, an outdoor real-world environment with full daylight can be between 3,300 nits to 8,400 nits, an office real-world environment can be between 100 nits to 170 nits, and a bedroom real-world environment can be between 20 nits to 35 nits. The above examples are non-limiting and can vary depending on the real-world environment, user-defined settings, and/or settings of the head-wearable device 114.

The respective transmission levels (e.g., the dimming level) of the first and second lenses 118 and 116 are determined based on a measured percentage of light that passes through respective portions of the first and second lenses 118 and 116. For example, in some embodiments, the disparity sensor 316 can measure the amount of light that passes through a first layer 150b of the first lens 118 and contacts the second layer 322b and/or third layer 320b of the first lens 118. Alternatively, or in addition, in some embodiments, the respective transmission levels of the first and second lenses 118 and 116 are determined based on a comparison of ambient light measured by the disparity sensor 316 and/or one or more light sensors 868 and light passing through a respective lens as measured by the disparity sensor 316. For example, a light sensor 868 can measure the ambient light at 5,000 nits and the disparity sensor 316 can measure the light passing through the lens at 1,000 nits, which is consistent with a transmission level that attenuates 80% of the incoming light. As described above, in some embodiments, the respective transmission levels of the first and second lenses 118 and 116 are determined based on a comparison of image data captured by one or more imaging sensors and sensor data obtained by the disparity sensor 316. For example, image data captured by the front-facing cameras 152b and 152a can be used to determine the current brightness of the user 110's real-world environment, and sensor data obtained by the disparity sensor 316 can be used to measure the light passing through each lens, and the image data and sensor data can be used to determine the respective transmission levels of the first and second lenses 118 and 116. The example techniques for determining a transmission level of a lens described above are non-limiting. The different techniques disclosed herein can use only the sensor data obtained from the disparity sensor 316 or data obtained from the disparity sensor 316 and other components (e.g., a light sensor 868 and/or an imaging sensor) to determine a transmission level of a lens.

The dimming levels of the first and second lenses 118 and 116 can vary from a maximum dimming level (e.g., such that there is 0% to 5% visible light transmission, where visible light transmission is the amount of light that reaches a user's eyes through lenses) to a minimum dimming level (e.g., such that there is 80% or more visible light transmission). At the maximum dimming level, the first and second lenses 118 and 116 have an increased tint and can be opaque or substantially opaque, and at the minimum dimming level, the first and second lenses 118 and 116 have little to no tint and can be clear or substantially clear. As the lenses transition from maximum dimming level to the minimum dimming level, and vice versa, the tint and opaqueness of the first and second lenses 118 and 116 are decreased and/or decreased based on the current dimming level.

The head-wearable device 114 can adjust the respective dimming levels of the first and second lenses 118 and 116 to obtain or maintain a respective predetermined visible light transmission or a respective predetermined light attenuation for each lens. In some embodiments, the head-wearable device 114 adjusts the respective dimming levels of the first and second lenses 118 and 116 to improve visibility and/or presentation of displayed AR content 112. For example, on bright days, the head-wearable device 114 can reduce the real-world environment brightness to improve the visibility of presented AR content 112. The head-wearable device 114 improves visibility and/or presentation of displayed AR content 112 by adjusting an additive contrast ratio (C) of a lens, which is based on a relationship between a display brightness (D), a real-world environment brightness (W), and/or lens transmission (T). In some embodiments, the relationship between the different variables of a lens additive contrast ratio (C) is defined by the following formula:

$$C = 1 + \frac{D}{(W * T)}$$

The head-wearable device 114 adjusts the dimming level and/or the additive contrast ratio of a lens by providing one or more electrical signals to the dimmable element of a first layer 150 of a lens. More specifically, head-wearable device 114 adjusts a voltage applied to a respective lens to adjust the dimming level and/or the additive contrast ratio of the respective lens. The head-wearable device 114 can adjust the respective voltages provided to the first and second lenses 118 and 116 such that the first and second lenses 118 and 116 have or maintain respective predetermined dimming levels and/or respective additive contrast ratios. Additionally, or alternatively, in some embodiments, head-wearable device 114 can adjust the respective voltages provided to the first and second lenses 118 and 116 such that the first and second lenses 118 and 116 have or maintain respective predetermined visible light transmissions or respective predetermined light attenuations. The head-wearable device 114 can provide electrical signals and/or voltages to a dimmable element of the first layer 150 of a lens via circuitry coupled with at least the first layer 150. In some embodiments, the head-wearable device 114 can provide electrical signals and/or voltages to a dimmable element of a lens via circuitry coupled with a lens and/or a disparity sensor 316 electrically coupled with the dimmable element.

As shown in Figure 1B, when the user 110 steps inside to a less bright real-world environment, the dimming levels of the first and/or second lenses 118 and/or 116 are reduced. As the dimming levels of the first and/or second lenses 118 and/or 116 are reduced, the respective tint in the first and/or second lenses 118 and/or 116 is reduced such that the first and/or second lenses 118 and/or 116 are transparent or substantially transparent.

For example, as shown by chart 124-2, which shows the dimming level percentages for the first lens 118 and the second lens 116 as a function of the brightness of the real-world environment at a second point in time (t2), while indoors (e.g., a well-lit room with ambient light measured at approximately 150 lux), the first lens 118 and the second lens 116 have a dimming level of about 5% to 10% (i.e., such that 5% to 10% of the light passing through the first lens 118 and the second lens 116 is attenuated), as indicated by the circular marker 122 and the star marker 126.

As described above, the head-wearable device 114 can automatically adjust the dimming elements of the first and/or second lenses 118 and/or 116 to control the amount of light that reaches the user 110's eyes (e.g., maintain a predetermined visible light transmission) and/or to improve visibility of presented AR content 112 (e.g., maintain a predetermined additive contrast ratio). Each dimming element can be controlled independently to compensate for other transmission or display brightness asymmetries in a system (e.g., a head-wearable device 114). Alternatively, or in addition, in some embodiments, the respective dimming levels of the first and second lenses 118 and 116 are adjusted in response to a trigger condition indicating that the dimming levels require adjusting. In some embodiments, a trigger condition includes a predetermined additive contrast ratio. For example, in accordance with a determination that an additive contrast ratio for the head-wearable device 114 falls below a threshold amount, a trigger condition is detected and the dimming levels of the first and/or second lenses 118 and/or 116 are adjusted. In some embodiments, a trigger condition includes one or more of a predetermined time of day (e.g., morning, afternoon, evening, night), predetermined location (e.g., inside, outside, office, bedroom), a predetermined dimming level (e.g., 80%, 50%, 20%, light attenuation), and/or a predetermined type of AR content (e.g., gaming application, media content, articles). For example, the head-wearable device 114, in response to receiving user instructions to present a movie via its display, detects the presence of a trigger condition (e.g., presentation of a predetermined type of AR content) and automatically adjusts the dimming elements of the first and/or second lenses 118 and/or 116.

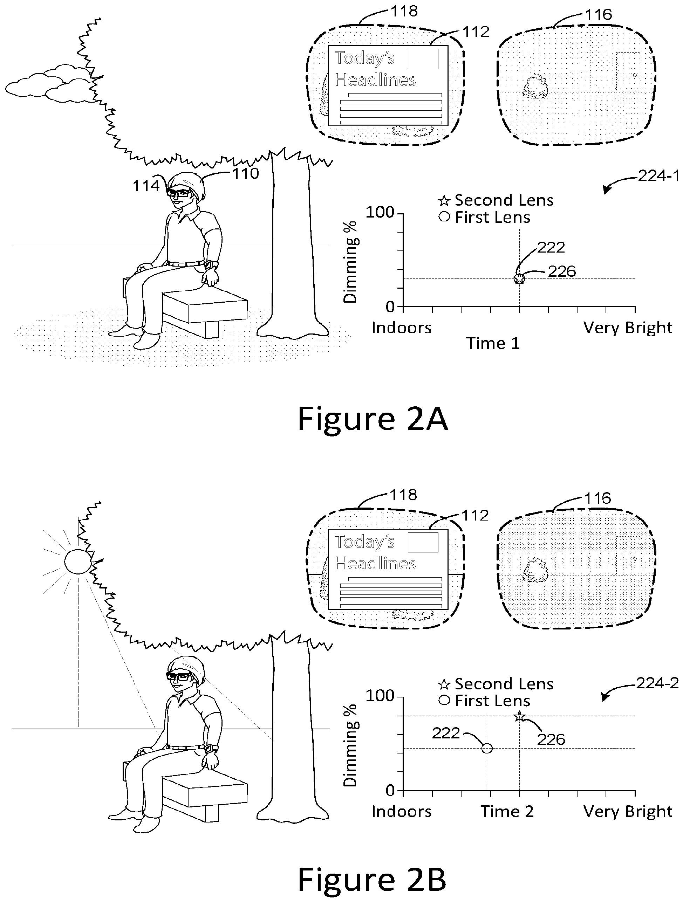

Although Figures 1A and 1B show the first and second lenses 118 and 116 having the same dimming level, as discussed below in reference to Figures 2A-2D, each lens can have a respective dimming level. More specifically, the first lens 118 can have a first dimming level and the second lens 116 can have a second dimming level distinct from the first dimming level. As further described below, the respective dimming levels of the first and/or second lenses 118 and/or 116 are affected by AR content 112 presented on the respective lenses.

Figures 2A-2D illustrate lenses of a head-wearable device dimmed independent of each other, in accordance with some embodiments. Specifically, Figures 2A-2D show changes to respective dimming levels of first and second lenses 118 and 116 of a head-wearable device 114 as the day changes and the sun moves to different positions. In some embodiments, the head-wearable device 114 can cause the first lens 118, the second lens 116, or both to present AR content 112.

In Figure 2A, a user 110 wearing a head-wearable device 114 is sitting outside at a first point in time (e.g., time 1) while the head-wearable device presents AR content 112 via at least one lens (e.g., the first lens 118). At the first point in time, the sun is partially covered by clouds resulting in a partially sunny day with equal amounts of light contacting the first and second lenses 118 and 116. Because both the first and second lenses 118 and 116 are exposed to the same amount of light, the head-wearable device 114 adjusts the dimming of the first and second lenses 118 and 116 such that they have the same dimming level (e.g., about 30%). The respective dimming levels of the first and second lenses 118 and 116 are shown in chart 224-1, which includes a circular marker 222 for the first lens 118 and a star marker 226 for the second lens 116.

In Figure 2B, the user 110 is shown sitting outside at a second point in time (e.g., time 2). At the second point in time, the clouds have dissipated, and the sun is shining directly on a portion of the user 110. In particular, a first amount of sunlight, which is partially blocked by a tree, contacts the first lens 118 of the head-wearable device 114 and a second amount of sunlight, greater than the first amount, contacts the second lens 116 of the head-wearable device 114. The head-wearable device 114 is configured to detect, via a disparity sensor 316 (Figures 3A-3C), the different amounts of sunlight contacting the first and second lenses 118 and 116 and adjust the respective dimming levels of the first and second lenses 118 and 116 accordingly. For example, as shown by the chart 224-2, the head-wearable device 114 increases the dimming level of the first lens 118 to approximately 40% to 45% (as shown by the circular marker 222) and increases the dimming level of the second lens 116 to approximately 80% (as shown by the star marker 226). Because the tree provides the first lens 118 with additional coverage from the sun, the head-wearable device 114 does not have to increase the first lens 118's dimming level as much as the second lens 116. Although the second lens 116 is dimmed to a greater level than the first lens 118, the user 110 perceives their field of view as having a uniform dim. In other words, although the first and second lenses 118 and 116 are at different dimming levels, the user 110 perceives both lenses as having the same dimming level. As described above in reference to Figures 1A and 1B, the first and second lenses 118 can be dimmed substantially simultaneously or independently from one another based on sensor data (e.g., from a disparity sensor 316), image data, and/or other data.

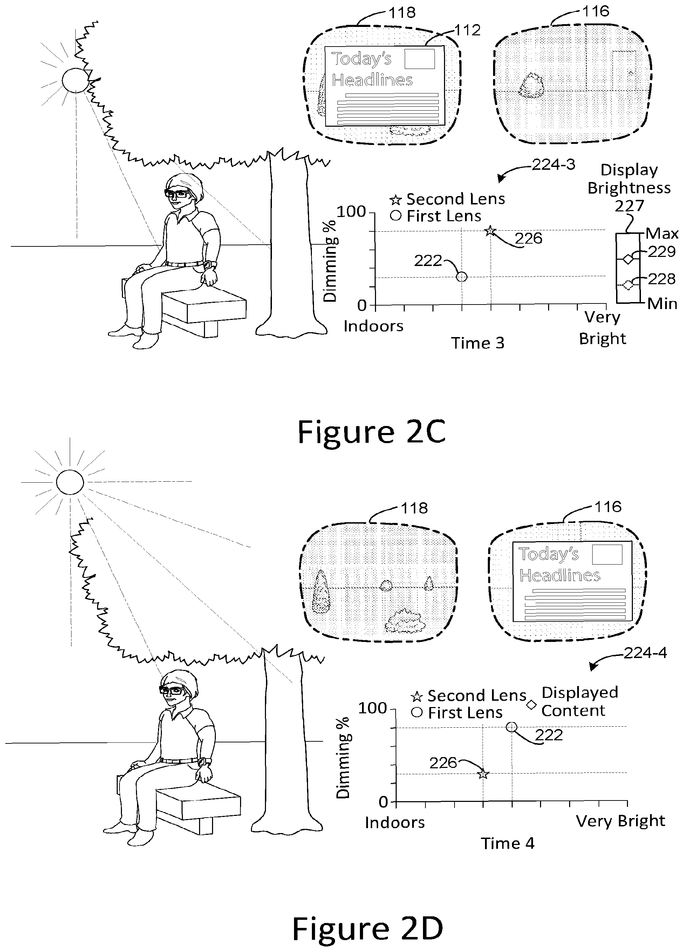

Figure 2C shows the user sitting outside at a third point in time (e.g., time 3). At the third point in time, the head-wearable device 114 adjusts an additive contrast ratio of the first lens 118 to improve visibility of the presented AR content 112. As described above in Figures 1A and 1B, an additive contrast ratio for a lens is based on one or more of a display brightness, a real-world environment brightness, and/or lens transmission (or dimming level). In Figure 2C, to improve the visibility of the presented AR content 112, the head-wearable device increases the brightness of a display of the head-wearable device 114, which can be a part of the first lens 118. For example, as described below in reference to Figures 3A-3C, the display can be a waveguide that is part of or integrated into a second layer 320a of the first lens 118. As shown by the display brightness bar 227, the display brightness at the third point in time is increased from a first point 228 to a second point 229. The maximum and minimum brightness of a display of the head-wearable device 114 are based on the type of display used and/or device settings. Example maximum and minimum brightness parameters are discussed below in reference to Figures 3A-3C.

As further shown in Figure 2C, in conjunction with increasing the brightness of the display, the head-wearable device 114 reduces the dimming level of the first lens 118 (e.g., from about 40%-45% to 30%), as shown by the positions of circle marker 222 and star marker 226 on chart 224-3. By dimming the first lens 118, the head-wearable device 114 makes the presented AR content 112 easier to see. Additionally, the head-wearable device 114 can adjust the dimming level of the first lens 118 to further change the additive contrast ratio of the first lens 118. In some embodiments, the head-wearable device 114 can adjust a single variable (e.g., display brightness) or multiple variables (e.g., display brightness and dimming level) to obtain or maintain a predetermined additive contrast ratio. In some embodiments, if the head-wearable device 114 cannot obtain or maintain a particular additive contrast ratio by changing the display brightness and/or the lens transmission, the head-wearable device 114 can present suggestions to the user for adjusting a real-world environment brightness. For example, if adjustments to the display brightness and/or the lens transmission cannot obtain or maintain a determined additive contrast ratio for current environmental conditions (e.g., bright day), the head-wearable device 114 can present a prompt suggesting the user change locations (e.g., "please move to a more shaded area"). Alternatively, as discussed below in reference to Figure 2D, in response to a determination that the head-wearable device 114 cannot present the AR content 112 via the first lens 118, the head-wearable device 114 can cause the AR content 112 to be presented via the second lens 116.

In Figure 2D, the user is sitting outside at a fourth point in time (e.g., time 4). At the fourth point in time, the sun has changed positions such that the sunlight is directed at the first lens 118 and a portion of the tree blocks a portion of the sunlight from contacting the second lens 116. The head-wearable device 114, in response to a determination that a predetermined additive contrast ratio for the first lens 118 cannot be obtained or maintained and/or that a predetermined dimming level cannot be obtained, ceases to cause presentation of the AR content 112 on the first lens 118 and causes presentation of the AR content 112 on the second lens 116. In conjunction with causing presentation of the AR content 112 on the second lens 116, the head-wearable device 114 can also adjust a dimming level and/or additive contrast ratio of the second lens 116 to improve visibility of the AR content 112. For example, as shown by chart 224-4, the first lens 118 is dimmed to approximately 80% (e.g., as shown by the circle marker 222) and the second lens 116 is dimmed to approximately 30% (e.g., as shown by the star marker 226). Although not show, the head-wearable device 114 can also adjust an additive contrast ratio of the second lens 116 as described above in reference to Figures 1A-2C.

In some embodiments, the head-wearable device 114 can selectively cause presentation of AR content 112 in the first lens 118, the second lens 116, or both. In some embodiments, selection of a particular lens is based on environmental conditions, energy consumption, and/or quality of AR content 112. For example, the head-wearable device 114 can select to present AR content 112 to be presented via a lens exposed to the least amount of sun, the lens requiring the least amount of dimming, the lens requiring the least amount of voltage, and/or other factors. Although Figures 1A-2D illustrate AR content 112 presented via a single lens, the skilled artisan will appreciate upon reading the descriptions provided herein that the head-wearable device 114 can cause presentation of AR content 112 via both lenses.

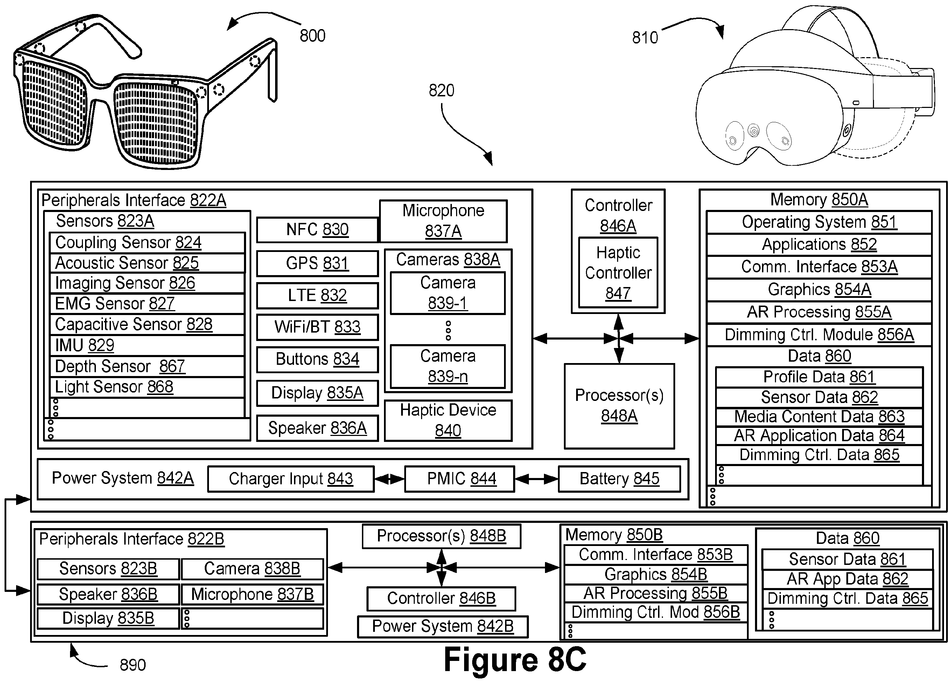

The above examples are non-exhaustive. For example, the disparity sensor 316 can be used in conjunction with a dedicated dimming control loop (e.g., including a calibrated light source and sensor, or charge level measurement circuit). In another embodiments, eye-tracking cameras could be used in addition to a disparity sensor 316 to measure the brightness of the world through a dimming control module 856 discussed below in reference to Figure 8C. In yet another embodiment, two or more front-facing imaging sensors and/or two or more sensors can be used to determine a dimming state, with at least one front-facing imaging sensor and/or at least one sensor associated with a dimming control module 856 and at least one front-facing imaging sensor and/or at least one sensor providing raw data. The imaging sensors can include simultaneous localization and mapping (SLAM) cameras, red-green-blue (RGB) cameras, and/or other cameras. The sensors can include ambient light sensors (either dedicated to world brightness monitoring or being used for privacy indicator brightness adjustment and/or anti-tampering). In an additional embodiment, a direct measurement of ambient-to-display light ratio using only the disparity sensor 316 provides a single feedback signal to the active dimming system without the need for a front-facing sensor signal.

Figures 3A-3C illustrate one or more sensors integrated or coupled with artificial-reality glasses, in accordance with some embodiments. The artificial-reality glasses 300 are an embodiment of head-wearable device 114 (Figures 1A-2D). Figure 3A illustrates a first view 310 (e.g., an exterior-facing view) of the artificial-reality glasses 300. The artificial-reality glasses 300 include a frame 315 coupled with a first lens 118 and a second lens 116. One or more sensors 304, 306, and/or 308 are integrated into or coupled with a portion of the frame 315. For example, as shown in the first view 310, a first ambient light sensor 308, a first front-facing camera 152b, a second ambient light sensor 304, and a second front-facing camera 152a are integrated into or coupled with a front (e.g., exterior) portion of the frame 315. As discussed in Figures 1A-2D, respective light information can be detected via one or more sensors of the artificial-reality glasses 300 and used for determining respective dimming levels of the first and second lenses 118 and/or 116. Additional sensors included in a head-wearable device 114, such as the artificial-reality glasses 300, are discussed below in reference to Figures 8A-8C.

Figure 3B illustrates a second view 330 (e.g., an interior view or face-contacting portion) of the artificial-reality glasses 300. The artificial-reality glasses 300 can include additional sensors integrated into or coupled within an interior portion of the frame 315. For example, a first disparity sensor 316b and a second disparity sensor 316a are coupled with or integrated into the interior portion of the frame 315. Although the second view 330 shows two disparity sensors, in some embodiments, artificial-reality glasses 300 can include a single disparity sensor. In some embodiments, the disparity sensor 316 is in circuitry of a head-wearable device 114 (e.g., computing system 820 described in Figure 8C). The artificial-reality glasses 300 can further include a first eye-tracking camera 317 and a second eye-tracking camera 318. The first and second eye-tracking cameras 317 and 318 can be positioned such that they are aimed towards the user's eyes (to directly track the user's eye movements) or aimed at the first and second lenses 118 and 116 (to indirectly track the user's eye movements via a reflection from the first and second lenses 118 and 116). As described below in reference to Figures 8A-8C., a head-wearable device, such as the artificial-reality glasses 300, can further include microphones, speakers, IMUs, and/or other devices and/or sensors.

Figure 3C illustrates first and second lenses 118 and 116 of the artificial-reality glasses 300, in accordance with some embodiments. The first and second lenses 118 and 116 can be formed via a plurality of layers. The plurality of layers can include at least two layers. For example, as shown in Figure 3C, the plurality of layers of the first lens 118 includes a first layer 150b, a second layer 322b, and a third layer 320b. The plurality of layers of the first and second lenses 118 and 116 can be the same or distinct. For example, the second lens 116 also includes respective first, second, and third layers 150a, 322a, and 320a.

In some embodiments, the first layer 150 (e.g., the first layer 150b and/or another first layer 150a) can include a dimmable element, which is configured to control the transmission level of a respective lens. Specifically, the dimmable element is configured to receive one or more electrical signals that cause a change in a transmission level of a first layer 150 (e.g., adjusting an amount of light reaching a second layer 322 and/or the user's eyes). The electrical signals can include one or more electrical properties, such as a voltage, an amplitude, a frequency, etc. The electrical signal is provided to the first layer 150 and/or the dimmable element via circuitry of the artificial-reality glasses 300, a power source electrically coupled with the first layer 150 and/or the dimmable element, and/or other components of a head-wearable device. The dimmable element can be formed of a thermochromic, photochromatic, or electrochromic material. In some embodiments, the dimmable element is formed of liquid crystal. Alternatively, in some embodiments, the dimmable element is mechanical.

In some embodiments, the second layer 322 includes or integrates a waveguide. The waveguide is configured to receive one or more light signals via a display or projector such that a representation of image data is presented to the user. Specifically, the second layer 322 is configured to receive image data (e.g., via one or more light signals) to cause the presentation of AR content (e.g., AR content 112, Figures 1A-2D). Alternatively, as discussed in detail below in reference to Figures 8A-8C., the lenses can include other types of displays. The second layer 322 can be illuminated at different brightness levels. As a non-limiting example, a minimum brightness of a display of the head-wearable device 114 can be approximately 10 nits, and a maximum brightness of the display of the head-wearable device 114 can be approximately 5,000 nits. As described above, a head-wearable device can adjust the brightness of a display (e.g., second layer 322) to adjust an additive contrast ratio of a lens.

In some embodiments, the third layer 320 includes or integrates additional waveguides, dimmable elements, and other integrated components to further assist in the presentation of AR content 112. For example, the third layer 320 can include additional waveguides to increase display brightness or present additional AR content 112. In some embodiments, the third layer 320 provides an additional element for measuring light as it travels through a lens. For example, an imaging sensor (e.g., an eye-tracking camera) aimed at the third layer 320 can be used to measure light as it travels through at least the first and/or second layers 150 and 322. Additionally, the third layer 320 can be used to track the user's eye movements. For example, an eye-tracking camera can capture reflections of the user's eye movements from the third layer 320 and the reflections of the user's eye movements, captured in image data, can be used to track the user's eye movements.

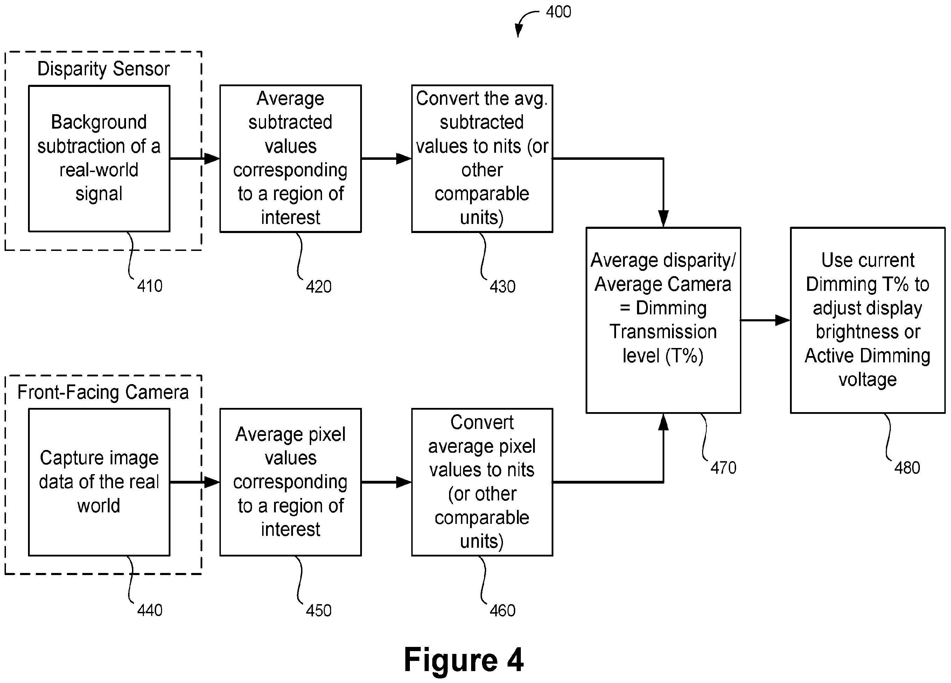

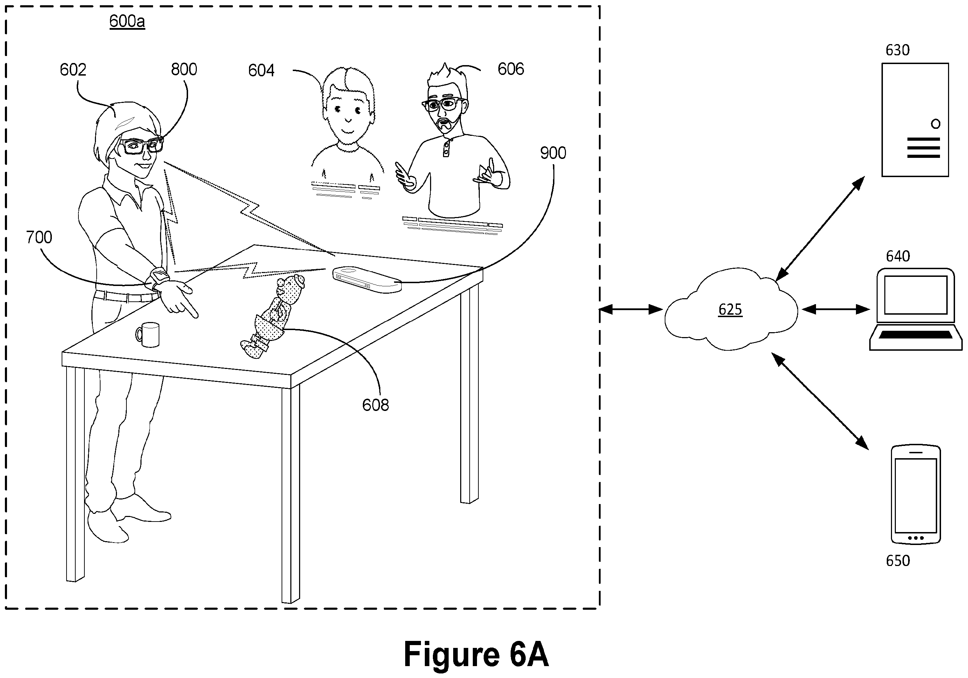

Figure 4 illustrates an example method for determining a dimming level for a lens based on sensor data obtained by a disparity sensor and/or image data captured by an imaging sensor, in accordance with some embodiments. Operations (e.g., steps) of the method 400 can be performed by one or more processors (e.g., central processing unit and/or MCU) of a head-wearable device 114 (e.g., Figures 1A-3C and Figures 8A-8C). At least some of the operations shown in Figure 4 correspond to instructions stored in a computer memory or computer-readable storage medium (e.g., storage, RAM, and/or memory (e.g., memory 850; Figure 8C)). Operations of the method 400 can be performed by a single device (e.g., a head-wearable device 114) alone or in conjunction with one or more processors and/or hardware components of another communicatively coupled device (e.g., a wrist-wearable device 700, a handheld intermediary processing device 900, a server 630, a computer 640, a mobile device 650, or other devices described below in reference to Figures 6A-9B) and/or instructions stored in memory or computer-readable medium of the other device communicatively coupled to the head-wearable device 114. In some embodiments, the various operations of the methods described herein are interchangeable and/or optional and respective operations of the methods are performed by any of the aforementioned devices, systems, or combination of devices and/or systems. For convenience, the method operations will be described below as being performed by a particular component or device but should not be construed as limiting the performance of the operation to the particular device in all embodiments.

The method 400 is performed at a head-wearable device 114 including one or more disparity sensors 316 (Figures 3A-3C) and/or front-facing cameras 152 (e.g., Figures 1A-3C). The method 400 includes determining (410) a background subtraction of a real-world signal (e.g., ambient or received light) based on sensor obtained by a disparity sensor 316. More specifically, the background subtraction includes determining the amount of light removed by a lens (e.g., first and/or second lenses 118 and/or 116) of the head-wearable device 114. The method 400 further includes determining (420) average subtracted values corresponding to a region of interest. In some embodiments, a region of interest is based on the user's field of view. For example, in some embodiments, a region of interest is pixels (of sensors, such as a disparity sensor) or a field of view of a user and/or sensors (e.g., disparity sensors). In some embodiments, the head-wearable device 114 can determine more than one region of interest. For example, a first region of interest can be a portion of pixels or a portion of a field of view of the disparity sensor that includes presented AR content, and a second region of interest can be a central 20-degree field of view of the disparity sensor that is dimmed to make the AR content more visible. Alternatively, in some embodiments, a region of interest is a portion of the lens presenting AR content. For example, eye tracking can be used to determine a portion of the lens on which the user is focused, and the portion of the lens on which the user is focused on can be the region of interest. For example, a first region of interest can be a portion of a lens presenting the AR content and a second region of interest can be a surrounding portion of the lens that is dimmed to make the AR content more visible. The method 400 includes converting (430) the average subtracted values to nits (or other comparable units). For example, average subtracted values measured in lux are converted to nits by dividing them by pi ($\pi$).

The method 400 also includes capturing (440), via a front-facing camera, image data of the real world. The method 400 includes determining (450) average pixel values corresponding to a region of interest. The region of interest can be based on a particular lens of the head-wearable device 114. For example, a first lens 118 (Figures 1A-3C) can be associated with a first front-facing camera 152b such that image data captured by the first front-facing camera 152b can be used for determining a region of interest corresponding to the first lens 118. In some embodiments, the region of interest can be based on an area or location on which the user is focused. For example, the front-facing camera can be configured to capture image data of the user's field of view, and the region of interest is selected based on the image data. In some embodiments, the region of interest determined based on the image data is the same or distinct from the region of interest described above at operation (420). The method 400 includes converting (460) the average pixel values to nits (or other comparable units). Specifically, image processing techniques are performed on the average pixel values corresponding to the region of interest (e.g., a portion of the image data) to convert the average pixel values to nits.

The method 400 further includes comparing (470) the converted average subtracted values (based on the sensor data captured by a disparity sensor 316) with the converted average pixel values (based on the image data captured by a front-facing camera) to determine a dimming transmission level (T%). For example, as shown in Figure 4, the converted average subtracted values are divided by the converted average pixel values to determine a current dimming transmission level. The method 400 further includes using (480) the current dimming transmission level to adjust a display brightness and/or active dimming voltage of a lens. As described above in reference to Figures 1A-3C, adjustments to the display brightness and/or active dimming voltage (which correspond to a dimming level adjustment) cause a change to an additive contrast ratio.

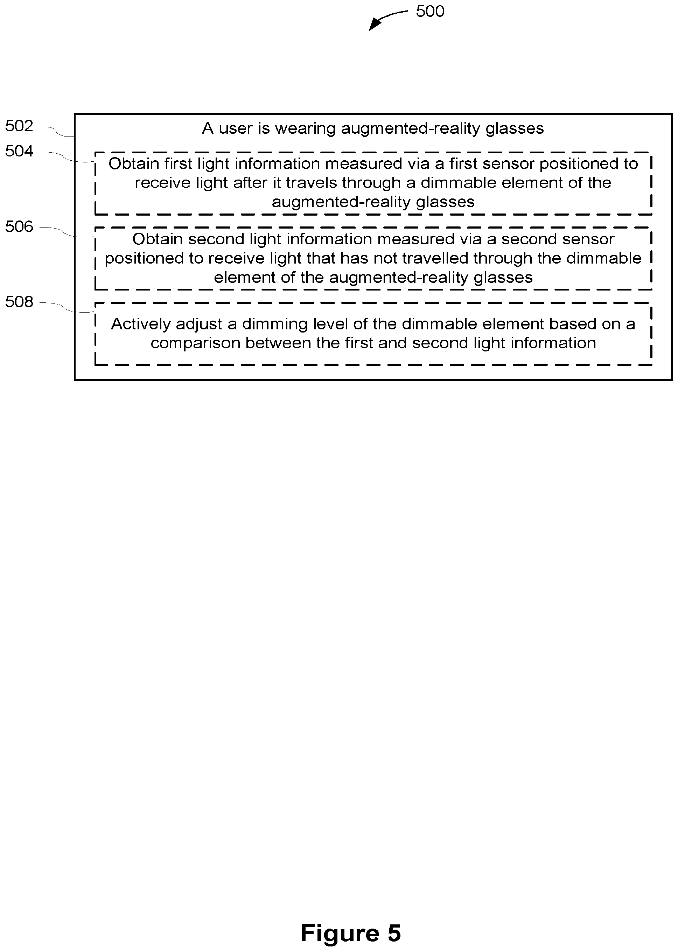

(A1) Figure 5 illustrates a flow chart of a method 500 of active dimming control for augmented-reality glasses, in accordance with some embodiments. Operations (e.g., steps) of the method 500 can be performed by one or more processors of a head-wearable device 114, as described above in reference to Figure 4. At least some of the operations shown in Figure 5 correspond to instructions stored in a computer memory or computer-readable storage medium. Operations of the method 500 can be performed by a single device (e.g., a head-wearable device 114) alone or in conjunction with one or more processors and/or hardware components of another communicatively coupled device and/or instructions stored in memory or computer-readable medium of the other device communicatively coupled to the head-wearable device 114. In some embodiments, the various operations of the methods described herein are interchangeable and/or optional, and respective operations of the methods are performed by any of the aforementioned devices, systems, or combination of devices and/or systems. For convenience, the method operations will be described below as being performed by a particular component or device but should not be construed as limiting the performance of the operation to the particular device in all embodiments.

The method 500 is performed by augmented-reality glasses (e.g., an embodiment of a head-wearable device 114) while the augmented-reality glasses are worn (502) by a user. The method 500 includes obtaining (504) first light information measured via a first sensor positioned to receive light after it travels through a dimmable element of the augmented-reality glasses. For example, a disparity sensor 316 (Figures 1A-3C) measures light after traveling through a portion of a lens. The lens can be formed of a plurality of layers including a first layer including a dimmable element. The disparity sensor 316 can detect light after traveling through at least the first layer 150. In some embodiments, the disparity sensor 316 measures light contacting a second layer 322 or a third layer 320 of the plurality of layers forming the lens. Different examples of obtaining the first light information via a disparity sensor are provided above in reference to Figures 1A-4.

The method 500 includes obtaining (506) second light information measured via a second sensor positioned to receive light that has not travelled through the dimmable element of the augmented-reality glasses. For example, an imaging sensor associated with a lens, such as a front-facing camera 152 (Figures 1A-3C) aligned with or positioned adjacent to a lens, captures image data of a real-world environment and/or ambient lighting before the light travels through the lens of the augmented-reality glasses. In some embodiments, a respective imaging sensor is associated with each lens. Alternatively, in some embodiments, a single imaging sensor is configured to provide light information for each lens. Different examples of obtaining the second light information, via a front-facing camera 152, are provided above in reference to Figures 1A-4.

The method 500 further includes, actively (e.g., electronically) adjusting (508) a dimming level of the dimmable element based on a comparison between the first and second light information. For example, as described above in reference to Figures 1A-4, a dimming level of each lens can be increased or decreased based on presented AR content, environmental conditions, or other factors.

(A2) In some embodiments of A1, the augmented-reality glasses include a dimmable element positioned farther away from the user compared to a display-presentation element of the augmented-reality glasses. For example, as shown above in reference to Figure 3C, a dimming element can be a part of a first layer of a lens, which is adjacent to an exterior portion of the augmented-reality glasses.

(A3) In some embodiments of any one of A1 and A2, the dimming level is further based on comparing either or both of the first and second light information with third light information measured via a third sensor. For example, as described above in reference to Figures 1A-2D, a head-wearable device 114 can include one or more light sensors 868 (e.g., an ambient light sensor) configured to detect real-world signals (e.g., ambient light or other external conditions).

(A4) In some embodiments of A3, the dimming level is further based on comparing two more of the first, second, and third light information with fourth light information measured via a fourth sensor.

(A4.5) In some embodiments of A4, the fourth sensor is an eye-tracking camera. The fourth sensor can include an eye-tracking camera that is configured to measure light of an external environment through a portion of the lens. For example, the eye-tracking camera can measure brightness through a dimming module (e.g., a first layer 150; e.g., Figures 3A-3C) of a lens. In some embodiments, an eye-tracking camera is positioned such that it is aimed at the lens and views the dimming module (e.g., a first layer 150; e.g., Figures 3A-3C) directly. Alternatively, in some embodiments, an eye-tracking camera is positioned such that it is aimed at the user's eye and obtains data for determining how much ambient light is coming through the lens and reaches the user's eye. Depending on an eye tracking camera's field of view, the eye tracking camera can also be configured to obtain data for determining the difference in brightness between light hitting the user's face after passing through the lens and light passing around the frame or body of a head-wearable device 114.

(A5) In some embodiments of any one of A1-A4.5, the dimmable element is a first dimmable element associated with a first lens of the augmented-reality glasses for the first eye of the user, and the augmented-reality glasses further include a second dimmable element associated with a second lens of the augmented-reality glasses for the second eye of the user. Actively adjusting the dimming level of the dimmable element includes actively adjusting the dimming level of the first dimmable element only. Examples of the first and/or second dimming elements are provided above in reference to Figures 1A-3C.

(A6) In some embodiments of A5, actively adjusting the dimming level of the dimmable element includes actively adjusting the dimming level of the second dimmable element after actively adjusting the dimming level of the first dimmable element. Example adjustments of the first and/or second dimming elements are provided above in reference to Figures 1A-2D.

(A7) In some embodiments of A6, the first dimmable element is adjusted to a first dimming level and the second dimmable element is adjusted to a second dimming level, distinct from the first dimming level. Example adjustments of the first and/or second dimming elements are provided above in reference to Figures 1A-2D.

(A8) In some embodiments of any one of A6 and A7, the method 500 further includes, before actively adjusting the dimming level, in accordance with a determination that artificial-reality content is being presented via the first lens, determining that the first dimmable element requires a dimming level adjustment to allow for proper viewing of the artificial-reality content. Actively adjusting the dimming level is performed for the first dimmable element in response to determining that the first dimmable element requires a dimming-level adjustment to allow for proper viewing of the artificial-reality content. Example adjustments to respective additive contrast ratios of the first and/or second dimming elements are provided above in reference to Figures 1A-2D.

(A9) In some embodiments of A8, the method 500 further includes, before actively adjusting the respective dimming level for the second dimmable element, in accordance with a determination that the artificial-reality content is being presented via the second lens, determining that the second dimmable element requires a dimming-level adjustment to allow for proper viewing of the artificial-reality content. Actively adjusting the respective dimming level is performed for the second dimmable element in response to determining that the second dimmable element requires a dimming-level adjustment to allow for proper viewing of the artificial-reality content. Example adjustments to respective additive contrast ratios of the first and/or second dimming elements are provided above in reference to Figures 1A-2D.

(A10) In some embodiments of any one of A8 and A9, the method 500 further includes, in conjunction with actively adjusting the dimmable element, adjusting respective brightness levels used to display user interface elements in front of each of the first and/or second dimmable elements. Example adjustments to respective additive contrast ratios of the first and/or second dimming elements are provided above in reference to Figures 1A-2D.

(A11) In some embodiments of any one of A8-A10, actively adjusting includes electronically adjusting the first dimmable element and the second dimmable element to a same dimming level.

(A12) In some embodiments of any one of A1-A9, the dimmable element includes (i) a first dimmable element associated with a first lens of the augmented-reality glasses for a first eye of the user and (ii) a second dimmable element associated with a second lens of the augmented-reality glasses for a second eye of the user, and the actively adjusting occurs substantially simultaneously for both of the first and second dimmable elements.

(A13) In some embodiments of any one of A1-A12, the first sensor is a disparity sensor configured to output first light information by comparing light from one or more waveguides.

(A14) In some embodiments of any one of A1-A13, the first light information measured by the first sensor accounts for a background subtraction of real-world signals.

(A15) In some embodiments of any one of A1-A14, the second sensor positioned in front of the dimmable element of the augmented-reality glasses is an imaging sensor.

(A16) In some embodiments of any one of A1-A15, the dimmable element is a photochromatic-, electrochromic-, thermochromic-, and/or mechanical-based element. The dimming elements are discussed above in reference to Figures 3A-3C.

(A17) In some embodiments of any one of A1-A16, actively adjusting the dimming level occurs in response to detecting a trigger condition indicating that the dimmable element requires an adjustment to the dimming level. Examples of the trigger conditions are provided above in reference to Figures 1A-2D.

(A18) In some embodiments of A17, the trigger condition is determined to be satisfied when an additive contrast ratio for the augmented-reality glasses falls below a threshold amount.

(B1) In accordance with some embodiments, a system that includes one or more wrist-wearable devices, an artificial-reality headset, and/or a handheld intermediary processing device, and the system is configured to perform operations corresponding to any of A1-A18.

(C1) In accordance with some embodiments, a non-transitory computer-readable storage medium including instructions that, when executed by a computing device (e.g., a head-wearable device 114) in communication with a head-wearable device 114, cause the computer device to perform operations corresponding to any of A1-A18.

(D1) An intermediary device configured to coordinate operations of a head-wearable device and a wrist-wearable device, the intermediary device configured to convey information between the head-wearable device and the wrist-wearable device in conjunction with the method of any one of A1 -A18.

(E1) In accordance with some embodiments, a non-transitory computer-readable storage medium including instructions that, when executed by one or more processors (e.g., processor 848A and/or processor 848B) of a head-wearable device (e.g., head-wearable device 114), cause the head-wearable device to cause the performance of one or more operations. The operations include, while a user (e.g., user 110) is wearing augmented-reality glasses (e.g., head-wearable device 114): (i) obtaining first light information measured via a first sensor (e.g., one or more sensors of the head-wearable device 114 including a disparity sensor 316) positioned to receive light after it travels through a dimmable element (e.g., the first lens 118 that includes at least a first layer 150b, which includes a first integrated dimmable element) of the augmented-reality glasses, (ii) obtaining second light information measured via a second sensor (e.g., front-facing camera 152) positioned to receive light that has not travelled through the dimmable element of the augmented-reality glasses, and (iii) actively adjusting a dimming level of the dimmable element based on a comparison between the first and second light information. For example, as described in Figures 1A-4, the dimming level of each lens can be changed based on content presented at the first and/or second lens and environment conditions. For example, when a user 110 is inside of a dark building, the first and/or second lenses 118 and 116 are not required to be as dimmed so that the user 110 can still see through the lens and view the presented AR content.

(E2) In some embodiments of E1, the dimmable element is a first dimmable element associated with a first lens of the augmented-reality glasses for a first eye of the user, the augmented-reality glasses also include a second dimmable element associated with a second lens of the augmented-reality glasses for a second eye of the user, and actively adjusting includes electronically adjusting the dimming level only for the first dimmable element. Examples of the first and/or second dimming elements are provided above in reference to Figures 1A-3C.

(E3) In some embodiments of any one of E1 and E2, the actively adjusting includes electronically adjusting the first dimmable element to a first dimming level and the second dimmable element to a second dimming level, distinct from the first dimming level. Example adjustments of the first and/or second dimming elements are provided above in reference to Figures 1A-2D.

(E4) In some embodiments of any one of E1-E3, the instructions that, when executed by the head-wearable device, also cause the head-wearable device to, before actively adjusting the dimming level, in accordance with a determination that artificial-reality content (e.g., AR content 112) is being presented via the first lens, determine that the first dimmable element requires a dimming-level adjustment to allow for proper viewing of the artificial-reality content. Actively adjusting the dimming level is performed for the first dimmable element in response to the determination that the first dimmable element requires a dimming level adjustment to allow for proper viewing of the AR content. Example adjustments to respective additive contrast ratios of the first and/or second dimming elements are provided above in reference to Figures 1A-2D.

(E5) In some embodiments of any one of E1-E4, the dimmable element includes (i) a first dimmable element associated with a first lens of the augmented-reality glasses for a first eye of the user and (ii) a second dimmable element associated with a second lens of the augmented-reality glasses for a second eye of the user, and the actively adjusting occurs substantially simultaneously for both the first and second dimmable elements. Figures 1A-4 illustrate multiple dimmable elements in the head-wearable device 114.

(E6) In some embodiments of any one of E1-E5, actively adjusting the dimming level occurs in response to detecting a trigger condition indicating that the dimmable element requires an adjustment to the dimming level. For example, Figures 1A-1B describe the requirements for trigger condition.

(E7) In some embodiments of any one of E1-E6, the trigger condition is determined to be satisfied when an additive contrast ratio for the augmented-reality glasses (e.g., AR glasses 300) falls below a threshold amount. For example, the additive contrast ratio is further discussed in Figure 1A.

(E8) In some embodiments of any one of E1-E7, the augmented-reality glasses (e.g., AR glasses 300) include a dimmable element positioned farther away from the user compared to a display-presentation element of the augmented-reality glasses (e.g., AR glasses 300). For example, Figure 3C illustrates a dimming element as part of a first layer of a lens adjacent to an exterior portion of the head-wearable device 114.

(E9) In some embodiments of any one of E1-E8, the first sensor is a disparity sensor configured to output first light information by comparing light from one or more waveguides. For example, features of the disparity sensor 316 are discussed in Figures 3A-3C.

(F1) In accordance with some embodiments, a head-wearable device includes one or more sensors (e.g., one or more sensors of the head-wearable device 114, including a disparity sensor 316), one or more imaging devices (e.g., front-facing camera 152), two lenses (e.g., the first and/or second lenses 118 and 116), memory (e.g., memory 850A and/or memory 850B) including instructions for performing one or more operations, and one or more processors (e.g., processors 848A and/or processors 848B) configured to execute the instructions to cause the performance of one or more operations. The operations include, while a user (e.g., user 110) is wearing augmented-reality glasses (e.g., head-wearable device 114), obtaining first light information measured via a first sensor of the one or more sensors positioned to receive light after it travels through a dimmable element of the augmented-reality glasses, obtaining second light information measured via a second sensor (e.g., front-facing camera 152) of the one or more sensors positioned to receive light that has not travelled through the dimmable element of the augmented-reality glasses, and actively adjusting a dimming level of the dimmable element based on a comparison between the first and second light information.

(F2) In some embodiments of F1, the dimmable element is a first dimmable element associated with a first lens of the augmented-reality glasses for a first eye of the user, the augmented-reality glasses also include a second dimmable element associated with a second lens of the augmented-reality glasses for a second eye of the user, and actively adjusting includes electronically adjusting the dimming level only for the first dimmable element. Examples of the first and/or second dimming elements are provided above in reference to Figures 1A-3C.

The devices described above are further detailed below, including wrist-wearable devices, headset devices, systems, and haptic feedback devices. Specific operations described above may occur as a result of specific hardware; such hardware is described in further detail below. The devices described below are not limiting and features on these devices can be removed or additional features can be added to these devices.

The devices described above are further detailed below, including systems, wrist-wearable devices, headset devices, and smart textile-based garments. Specific operations described above may occur as a result of specific hardware; such hardware is described in further detail below. The devices described below are not limiting and features on these devices can be removed or additional features can be added to these devices. The different devices can include one or more analogous hardware components. For brevity, analogous devices and components are described below. Any differences in the devices and components are described below in their respective sections.

As described herein, a processor (e.g., a central processing unit (CPU), microcontroller unit (MCU)) is an electronic component that is responsible for executing instructions and controlling the operation of an electronic device (e.g., a wrist-wearable device 700, a head-wearable device 114 (Figures 1A-5), an HIPD 900, a smart textile-based garment (such as wearable gloves, not shown), or other computer system). There are several types of processors that may be used interchangeably, or may be specifically required, by embodiments described herein. For example, a processor may be (i) a general processor designed to perform a wide range of tasks, such as running software applications, managing operating systems, and performing arithmetic and logical operations; (ii) a microcontroller designed for specific tasks, such as controlling electronic devices, sensors, and motors; (iii) a graphics processing unit (GPU) designed to accelerate the creation and rendering of images, videos, and animations (e.g., virtual-reality animations, such as three-dimensional modeling); (iv) a field-programmable gate array (FPGA) that can be programmed and reconfigured after manufacturing, and/or can be customized to perform specific tasks, such as signal processing, cryptography, and machine learning; and (v) a digital signal processor (DSP) designed to perform mathematical operations on signals such as audio, video, and radio waves. One of skill in the art will understand that one or more processors of one or more electronic devices may be used in various embodiments described herein.

As described herein, controllers are electronic components that manage and coordinate the operation of other components within an electronic device (e.g., controlling inputs, processing data, and/or generating outputs). Examples of controllers can include (i) microcontrollers, including small, low-power controllers that are commonly used in embedded systems and Internet of Things (IoT) devices; (ii) programmable logic controllers (PLCs), which may be configured to be used in industrial automation systems to control and monitor manufacturing processes; (iii) system-on-a-chip (SoC) controllers, which integrate multiple components such as processors, memory, I/O interfaces, and other peripherals into a single chip; and/or DSPs. As described herein, a graphics module is a component or software module that is designed to handle graphical operations and/or processes, and can include a hardware module and/or a software module.

As described herein, memory refers to electronic components in a computer or electronic device that store data and instructions for the processor to access and manipulate. The devices described herein can include volatile and non-volatile memory. Examples of memory can include (i) random access memory (RAM), such as DRAM, SRAM, DDR RAM or other random access solid state memory devices, configured to store data and instructions temporarily; (ii) read-only memory (ROM), configured to store data and instructions permanently (e.g., one or more portions of system firmware, and/or boot loaders); (iii) flash memory, magnetic disk storage devices, optical disk storage devices, other non-volatile solid state storage devices, which can be configured to store data in electronic devices, e.g., USB drives, memory cards, and/or solid-state drives (SSDs); and (iv) cache memory, configured to temporarily store frequently accessed data and instructions. Memory, as described herein, can include structured data (e.g., SQL databases, MongoDB databases, GraphQL data, JSON data). Other examples of memory can include (i) profile data, including user account data, user settings, and/or other user data stored by the user; (ii) sensor data detected and/or otherwise obtained by one or more sensors; (iii) media content data, including stored image data, audio data, documents, and the like; and (iv) application data, which can include data collected and/or otherwise obtained and stored during use of an application; and/or any other types of data described herein.

As described herein, a power system of an electronic device is configured to convert incoming electrical power into a form that can be used to operate the device. A power system can include various components, including (i) a power source, which can be an alternating current (AC) adapter or a direct current (DC) adapter power supply; (ii) a charger input, and can be configured to use a wired and/or wireless connection (which may be part of a peripheral interface, such as a USB, micro-USB interface, near-field magnetic coupling, magnetic inductive and magnetic resonance charging, and/or radio frequency (RF) charging); (iii) a power-management integrated circuit, configured to distribute power to various components of the device and to ensure that the device operates within safe limits (e.g., regulating voltage, controlling current flow, and/or managing heat dissipation); and/or (iv) a battery configured to store power to provide usable power to components of one or more electronic devices.

As described herein, peripheral interfaces are electronic components (e.g., of electronic devices) that allow electronic devices to communicate with other devices or peripherals, and can provide a means for input and output of data and signals. Examples of peripheral interfaces can include (i) universal serial bus (USB) and/or micro-USB interfaces configured for connecting devices to an electronic device; (ii) Bluetooth interfaces configured to allow devices to communicate with each other, including Bluetooth low energy (BLE); (iii) near field communication (NFC) interfaces configured to be short-range wireless interface for operations such as access control; (iv) POGO pins, which may be small, spring-loaded pins configured to provide a charging interface; (v) wireless charging interfaces; (vi) GPS interfaces; (vii) Wi-Fi interfaces for providing a connection between a device and a wireless network; and (viii) sensor interfaces.

As described herein, sensors are electronic components (e.g., in and/or otherwise in electronic communication with electronic devices, such as wearable devices) configured to detect physical and environmental changes and generate electrical signals. Examples of sensors can include (i) imaging sensors for collecting imaging data (e.g., including one or more cameras disposed on a respective electronic device); (ii) biopotential-signal sensors; (iii) inertial measurement unit (e.g., IMUs) for detecting, for example, angular rate, force, magnetic field, and/or changes in acceleration; (iv) heart rate sensors for measuring a user's heart rate; (v) SpO2 sensors for measuring blood oxygen saturation and/or other biometric data of a user; (vi) capacitive sensors for detecting changes in potential at a portion of a user's body (e.g., a sensor-skin interface) and/or the proximity of other devices or objects; (vii) light sensors (e.g., time-of-flight sensors, infrared light sensors, visible light sensors), and/or sensors for sensing data from the user or the user's environment. As described herein, biopotential-signal-sensing components are devices used to measure electrical activity within the body (e.g., biopotential-signal sensors). Some types of biopotential-signal sensors include (i) electroencephalography (EEG) sensors configured to measure electrical activity in the brain to diagnose neurological disorders; (ii) electrocardiography (ECG or EKG) sensors configured to measure electrical activity of the heart to diagnose heart problems; (iii) electromyography (EMG) sensors configured to measure the electrical activity of muscles and to diagnose neuromuscular disorders; and (iv) electrooculography (EOG) sensors configured to measure the electrical activity of eye muscles to detect eye movement and diagnose eye disorders.

As described herein, an application stored in the memory of an electronic device (e.g., software) includes instructions stored in the memory. Examples of such applications include (i) games; (ii) word processors; (iii) messaging applications; (iv) media-streaming applications; (v) financial applications; (vi) calendars; (vii) clocks; (viii) web browsers; (ix) social media applications; (x) camera applications; (xi) web-based applications; (xii) health applications; (xiii) artificial reality applications; and/or any other applications that can be stored in memory. The applications can operate in conjunction with data and/or one or more components of a device or communicatively coupled devices to perform one or more operations and/or functions.

As described herein, communication interface modules can include hardware and/or software capable of data communications using any of a variety of custom or standard wireless protocols (e.g., IEEE 802.15.4, Wi-Fi, ZigBee, 6LoWPAN, Thread, Z-Wave, Bluetooth Smart, ISA100.11a, WirelessHART, or MiWi), custom or standard wired protocols (e.g., Ethernet or Home-Plug), and/or any other suitable communication protocol, including communication protocols not yet developed as of the filing date of this document. A communication interface is a mechanism that enables different systems or devices to exchange information and data with each other, including hardware, software, or a combination of both hardware and software. For example, a communication interface can refer to a physical connector and/or port on a device that enables communication with other devices (e.g., USB, Ethernet, HDMI, Bluetooth). In some embodiments, a communication interface can refer to a software layer that enables different software programs to communicate with each other (e.g., application programming interfaces (APIs), protocols such as HTTP and TCP/IP).

As described herein, a graphics module is a component or software module that is designed to handle graphical operations and/or processes, and can include a hardware module and/or a software module.

As described herein, non-transitory computer-readable storage media are physical devices or storage mediums that can be used to store electronic data in a non-transitory form (e.g., such that the data is stored permanently until it is intentionally deleted or modified).

## Example AR Systems

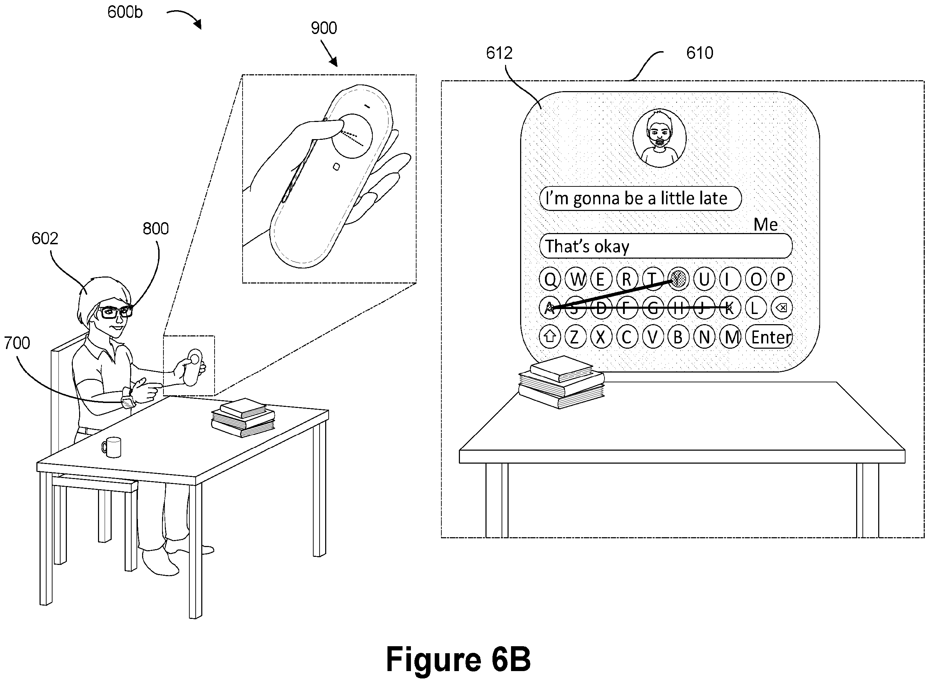

Figures 6A and 6B illustrate example artificial-reality systems, in accordance with some embodiments. Figure 6A shows a first AR system 600a and first example user interactions using a wrist-wearable device 700, a head-wearable device 114 (Figures 1A-5, such as AR device 800 and VR device 810), and/or a handheld intermediary processing device (HIPD) 900. Figure 6B shows a second AR system 600b and second example user interactions using a wrist-wearable device 700, AR device 800, and/or an HIPD 900. As the skilled artisan will appreciate upon reading the descriptions provided herein, the above-example AR systems (described in detail below) can perform various functions and/or operations described above with reference to Figures 1A-5.

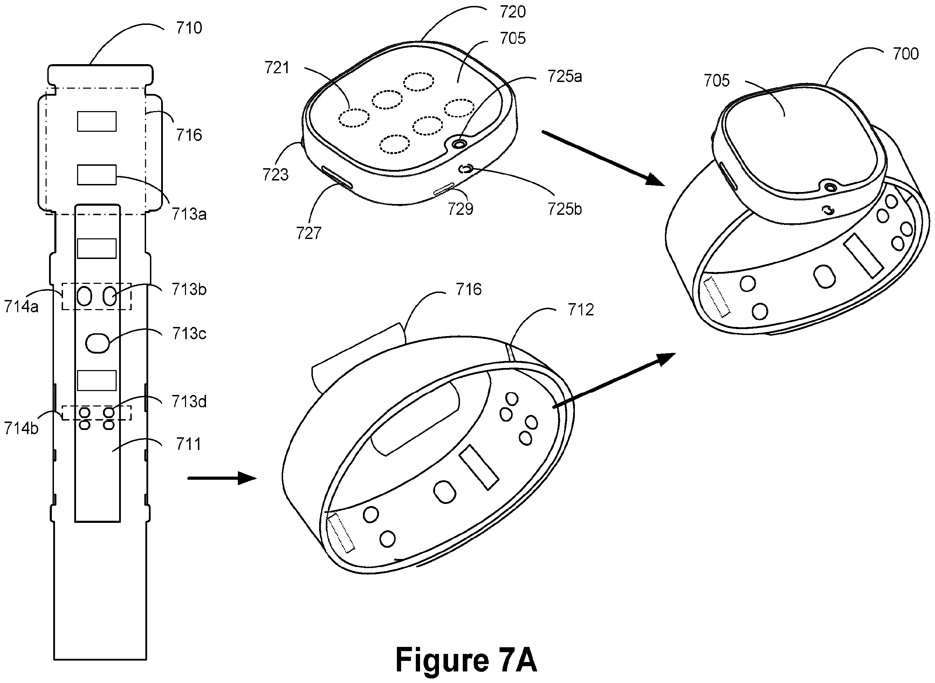

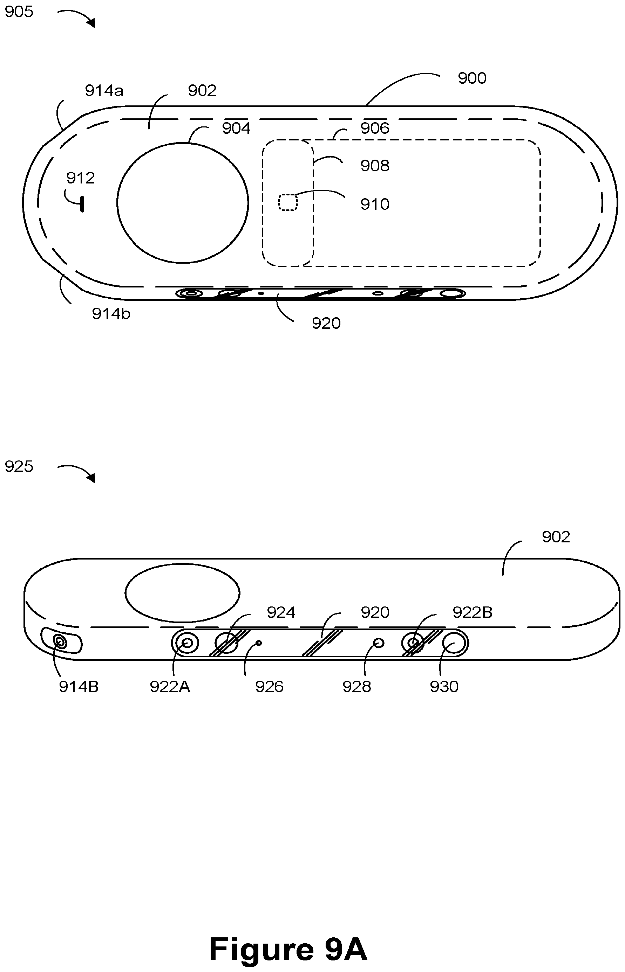

The wrist-wearable device 700 and one or more of its components are described below in reference to Figures 7A-7B; the head-wearable devices and their one or more components are described below in reference to Figures 8A-8D; and the HIPD 900 and its one or more components are described below in reference to Figures 9A-9B. Although not shown, a smart textile-based garment can be used with any device disclosed herein. The wrist-wearable device 700, the head-wearable devices, and/or the HIPD 900 can communicatively couple via a network 625 (e.g., cellular, near field, Wi-Fi, personal area network, wireless LAN). Additionally, the wrist-wearable device 700, the head-wearable devices, and/or the HIPD 900 can also communicatively couple with one or more servers 630, computers 640 (e.g., laptops, computers), mobile devices 650 (e.g., smartphones, tablets), and/or other electronic devices via the network 625 (e.g., cellular, near field, Wi-Fi, personal area network, wireless LAN).

Turning to Figure 6A, a user 602 is shown wearing the wrist-wearable device 700 and the AR device 800 and having the HIPD 900 on their desk. The wrist-wearable device 700, the AR device 800, and the HIPD 900 facilitate user interaction with an AR environment. In particular, as shown by the first AR system 600a, the wrist-wearable device 700, the AR device 800, and/or the HIPD 900 cause presentation of one or more avatars 604, digital representations of contacts 606, and virtual objects 608. As discussed below, the user 602 can interact with the one or more avatars 604, digital representations of the contacts 606, and virtual objects 608 via the wrist-wearable device 700, the AR device 800, and/or the HIPD 900.

The user 602 can use any of the wrist-wearable device 700, the AR device 800, and/or the HIPD 900 to provide user inputs. For example, the user 602 can perform one or more hand gestures that are detected by the wrist-wearable device 700 (e.g., using one or more EMG sensors and/or IMUs, described below in reference to Figures 7A-7B) and/or AR device 800 (e.g., using one or more image sensor or camera, described below in reference to Figures 8A-8B) to provide a user input. Alternatively, or additionally, the user 602 can provide a user input via one or more touch surfaces of the wrist-wearable device 700, the AR device 800, and/or the HIPD 900, and/or voice commands captured by a microphone of the wrist-wearable device 700, the AR device 800, and/or the HIPD 900. In some embodiments, the wrist-wearable device 700, the AR device 800, and/or the HIPD 900 include a digital assistant to help the user in providing a user input (e.g., completing a sequence of operations, suggesting different operations or commands, providing reminders, confirming a command). In some embodiments, the user 602 can provide a user input via one or more facial gestures and/or facial expressions. For example, cameras of the wrist-wearable device 700, the AR device 800, and/or the HIPD 900 can track the user 602's eyes for navigating a user interface.

The wrist-wearable device 700, the AR device 800, and/or the HIPD 900 can operate alone or in conjunction to allow the user 602 to interact with the AR environment. In some embodiments, the HIPD 900 is configured to operate as a central hub or control center for the wrist-wearable device 700, the AR device 800, and/or another communicatively coupled device. For example, the user 602 can provide an input to interact with the AR environment at any of the wrist-wearable device 700, the AR device 800, and/or the HIPD 900, and the HIPD 900 can identify one or more back-end and front-end tasks to cause the performance of the requested interaction and distribute instructions to cause the performance of the one or more back-end and front-end tasks at the wrist-wearable device 700, the AR device 800, and/or the HIPD 900. In some embodiments, a back-end task is background processing task that is not perceptible by the user (e.g., rendering content, decompression, compression), and a front-end task is a user-facing task that is perceptible to the user (e.g., presenting information to the user, providing feedback to the user). As described below in reference to Figures 9A-9B, the HIPD 900 can perform the back-end tasks and provide the wrist-wearable device 700 and/or the AR device 800 operational data corresponding to the performed back-end tasks such that the wrist-wearable device 700 and/or the AR device 800 can perform the front-end tasks. In this way, the HIPD 900, which has more computational resources and greater thermal headroom than the wrist-wearable device 700 and/or the AR device 800, performs computationally intensive tasks and reduces the computer resource utilization and/or power usage of the wrist-wearable device 700 and/or the AR device 800.

In the example shown by the first AR system 600a, the HIPD 900 identifies one or more back-end and front-end tasks associated with a user request to initiate an AR video call with one or more other users (represented by the avatar 604 and the digital representation of the contact 606) and distributes instructions to cause the performance of the one or more back-end and front-end tasks. In particular, the HIPD 900 performs back-end tasks for processing and/or rendering image data (and other data) associated with the AR video call and provides operational data associated with the performed back-end tasks to the AR device 800 such that the AR device 800 perform front-end tasks for presenting the AR video call (e.g., presenting the avatar 604 and the digital representation of the contact 606).

In some embodiments, the HIPD 900 can operate as a focal or anchor point for causing the presentation of information. This allows the user 602 to be generally aware of where information is presented. For example, as shown in the first AR system 600a, the avatar 604 and the digital representation of the contact 606 are presented above the HIPD 900. In particular, the HIPD 900 and the AR device 800 operate in conjunction to determine a location for presenting the avatar 604 and the digital representation of the contact 606. In some embodiments, information can be presented a predetermined distance from the HIPD 900 (e.g., within five meters). For example, as shown in the first AR system 600a, virtual object 608 is presented on the desk some distance from the HIPD 900. Similar to the above example, the HIPD 900 and the AR device 800 can operate in conjunction to determine a location for presenting the virtual object 608. Alternatively, in some embodiments, presentation of information is not bound by the HIPD 900. More specifically, the avatar 604, the digital representation of the contact 606, and the virtual object 608 do not have to be presented within a predetermined distance of the HIPD 900.

User inputs provided at the wrist-wearable device 700, the AR device 800, and/or the HIPD 900 are coordinated such that the user can use any device to initiate, continue, and/or complete an operation. For example, the user 602 can provide a user input to the AR device 800 to cause the AR device 800 to present the virtual object 608 and, while the virtual object 608 is presented by the AR device 800, the user 602 can provide one or more hand gestures via the wrist-wearable device 700 to interact and/or manipulate the virtual object 608.

Figure 6B shows the user 602 wearing the wrist-wearable device 700 and the AR device 800 and holding the HIPD 900. In the second AR system 600b, the wrist-wearable device 700, the AR device 800, and/or the HIPD 900 are used to receive and/or provide one or more messages to a contact of the user 602. In particular, the wrist-wearable device 700, the AR device 800, and/or the HIPD 900 detect and coordinate one or more user inputs to initiate a messaging application and prepare a response to a received message via the messaging application.

In some embodiments, the user 602 initiates, via a user input, an application on the wrist-wearable device 700, the AR device 800, and/or the HIPD 900 that causes the application to initiate on at least one device. For example, in the second AR system 600b, the user 602 performs a hand gesture associated with a command for initiating a messaging application (represented by messaging user interface 612); the wrist-wearable device 700 detects the hand gesture; and, based on a determination that the user 602 is wearing AR device 800, causes the AR device 800 to present a messaging user interface 612 of the messaging application. The AR device 800 can present the messaging user interface 612 to the user 602 via its display (e.g., as shown by user 602's field of view 610). In some embodiments, the application is initiated and ran on the device (e.g., the wrist-wearable device 700, the AR device 800, and/or the HIPD 900) that detects the user input to initiate the application, and the device provides another device operational data to cause the presentation of the messaging application. For example, the wrist-wearable device 700 can detect the user input to initiate a messaging application; initiate and run the messaging application; and provide operational data to the AR device 800 and/or the HIPD 900 to cause presentation of the messaging application. Alternatively, the application can be initiated and ran at a device other than the device that detected the user input. For example, the wrist-wearable device 700 can detect the hand gesture associated with initiating the messaging application and cause the HIPD 900 to run the messaging application and coordinate the presentation of the messaging application.

Further, the user 602 can provide a user input provided at the wrist-wearable device 700, the AR device 800, and/or the HIPD 900 to continue and/or complete an operation initiated at another device. For example, after initiating the messaging application via the wrist-wearable device 700 and while the AR device 800 presents the messaging user interface 612, the user 602 can provide an input at the HIPD 900 to prepare a response (i.e., shown by the swipe gesture performed on the HIPD 900). The user 602's gestures performed on the HIPD 900 can be provided and/or displayed on another device. For example, the user 602's swipe gestures performed on the HIPD 900 are displayed on a virtual keyboard of the messaging user interface 612 displayed by the AR device 800.

In some embodiments, the wrist-wearable device 700, the AR device 800, the HIPD 900, and/or other communicatively coupled device can present one or more notifications to the user 602. The notification can be an indication of a new message, an incoming call, an application update, a status update, etc. The user 602 can select the notification via the wrist-wearable device 700, the AR device 800, the HIPD 900, and cause presentation of an application or operation associated with the notification on at least one device. For example, the user 602 can receive a notification that a message was received at the wrist-wearable device 700, the AR device 800, the HIPD 900, and/or other communicatively coupled device and provide a user input at the wrist-wearable device 700, the AR device 800, and/or the HIPD 900 to review the notification, and the device detecting the user input can cause an application associated with the notification to be initiated and/or presented at the wrist-wearable device 700, the AR device 800, and/or the HIPD 900.

While the above example describes coordinated inputs used to interact with a messaging application, the skilled artisan will appreciate upon reading the descriptions that user inputs can be coordinated to interact with any number of applications, including, but not limited to, gaming applications, social media applications, camera applications, web-based applications, financial applications, etc. For example, the AR device 800 can present to the user 602 game application data and the HIPD 900 can use a controller to provide inputs to the game. Similarly, the user 602 can use the wrist-wearable device 700 to initiate a camera of the AR device 800, and the user can use the wrist-wearable device 700, the AR device 800, and/or the HIPD 900 to manipulate the image capture (e.g., zoom in or out, apply filters) and capture image data.

Having discussed example AR systems, devices for interacting with such AR systems, and other computing systems more generally, will now be discussed in greater detail below. Some definitions of devices and components that can be included in some or all of the example devices discussed below are defined here for ease of reference. A skilled artisan will appreciate that certain types of the components described below may be more suitable for a particular set of devices, and less suitable for a different set of devices. But subsequent reference to the components defined here should be considered to be encompassed by the definitions provided.

In some embodiments discussed below, example devices and systems, including electronic devices and systems, will be discussed. Such example devices and systems are not intended to be limiting, and one of skill in the art will understand that alternative devices and systems to the example devices and systems described herein may be used to perform the operations and construct the systems and devices that are described herein.

As described herein, an electronic device is a device that uses electrical energy to perform a specific function. It can be any physical object that contains electronic components such as transistors, resistors, capacitors, diodes, and integrated circuits. Examples of electronic devices include smartphones, laptops, digital cameras, televisions, gaming consoles, and music players, as well as examples of electronic devices discussed herein. As described herein, an intermediary electronic device is a device that sits between two other electronic devices, and/or a subset of components of one or more electronic devices and facilitates communication, and/or data processing and/or data transfer between the respective electronic devices and/or electronic components.

### Example Wrist-Wearable Devices

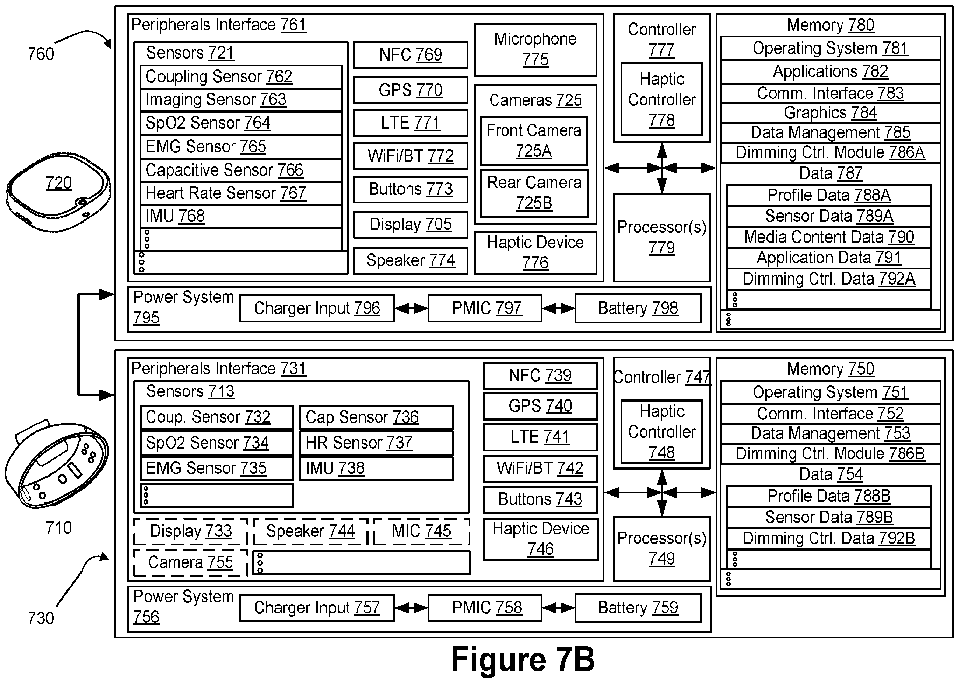

Figures 7A and 7B illustrate an example wrist-wearable device 700, in accordance with some embodiments. The wrist-wearable device 700 is an instance of the wearable device described in reference to Figures 4-6B herein. Figure 7A illustrates components of the wrist-wearable device 700, which can be used individually or in combination, including combinations that include other electronic devices and/or electronic components.

Figure 7A shows a wearable band 710 and a watch body 720 (or capsule) being coupled, as discussed below, to form the wrist-wearable device 700. The wrist-wearable device 700 can perform various functions and/or operations associated with navigating through user interfaces and selectively opening applications, as well as the functions and/or operations described above with reference to Figures 1A-5.

As will be described in more detail below, operations executed by the wrist-wearable device 700 can include (i) presenting content to a user (e.g., displaying visual content via a display 705); (ii) detecting (e.g., sensing) user input (e.g., sensing a touch on peripheral button 723 and/or at a touch screen of the display 705, a hand gesture detected by sensors (e.g., biopotential sensors)); (iii) sensing biometric data via one or more sensors 713 (e.g., neuromuscular signals, heart rate, temperature, sleep); messaging (e.g., text, speech, video); image capture via one or more imaging devices or cameras 725; wireless communications (e.g., cellular, near field, Wi-Fi, personal area network); location determination; financial transactions; providing haptic feedback; alarms; notifications; biometric authentication; health monitoring; sleep monitoring; etc.

The above-example functions can be executed independently in the watch body 720, independently in the wearable band 710, and/or via an electronic communication between the watch body 720 and the wearable band 710. In some embodiments, functions can be executed on the wrist-wearable device 700 while an AR environment is being presented (i.e., via one of the AR systems 600a and 600b). As the skilled artisan will appreciate upon reading the descriptions provided herein, the novel wearable devices described herein can be used with other types of AR environments.

The wearable band 710 can be configured to be worn by a user such that an inner (or inside) surface of the wearable structure 711 of the wearable band 710 is in contact with the user's skin. When worn by a user, sensors 713 contact the user's skin. The sensors 713 can sense biometric data such as a user's heart rate, saturated oxygen level, temperature, sweat level, neuromuscular signal sensors, or a combination thereof. The sensors 713 can also sense data about a user's environment, including a user's motion, altitude, location, orientation, gait, acceleration, position, or a combination thereof. In some embodiments, the sensors 713 are configured to track a position and/or motion of the wearable band 710. The one or more sensors 713 can include any of the sensors defined above and/or discussed below with respect to Figure 7B.

The one or more sensors 713 can be distributed on an inside and/or an outside surface of the wearable band 710. In some embodiments, the one or more sensors 713 are uniformly spaced along the wearable band 710. Alternatively, in some embodiments, the one or more sensors 713 are positioned at distinct points along the wearable band 710. As shown in Figure 7A, the one or more sensors 713 can be the same or distinct. For example, in some embodiments, the one or more sensors 713 can be pill-shaped (e.g., sensor 713a), oval, a circle, square, oblong (e.g., sensor 713c) and/or any other shape that maintains contact with the user's skin (such that neuromuscular signal and/or other biometric data can be accurately measured at the user's skin). In some embodiments, the one or more sensors 713 are aligned to form pairs of sensors (e.g., for sensing neuromuscular signals based on differential sensing within each respective sensor). For example, sensor 713b is aligned with an adjacent sensor to form sensor pair 714a and sensor 713d aligned with an adjacent sensor to form sensor pair 714b. In some embodiments, the wearable band 710 does not have a sensor pair. Alternatively, in some embodiments, the wearable band 710 has a predetermined number of sensor pairs (e.g., one pair of sensors, three pairs of sensors, four pairs of sensors, six pairs of sensors, sixteen pairs of sensors).

The wearable band 710 can include any suitable number of sensors 713. In some embodiments, the number and arrangement of sensors 713 depends on the particular application for which the wearable band 710 is used. For instance, a wearable band 710 configured as an armband, wristband, or chest band may include a plurality of sensors 713 with a different number of sensors 713 and different arrangement for each use case, such as medical use cases as compared to gaming or everyday-use cases.

In accordance with some embodiments, the wearable band 710 further includes an electrical ground electrode and a shielding electrode. The electrical ground and shielding electrodes, like the sensors 713, can be distributed on the inside surface of the wearable band 710 such that they contact a portion of the user's skin. For example, the electrical ground and shielding electrodes can be at an inside surface of coupling mechanism 716 or an inside surface of a wearable structure 711. The electrical ground and shielding electrodes can be formed of and/or use the same components as the sensors 713. In some embodiments, the wearable band 710 includes more than one electrical ground electrode and more than one shielding electrode.

The sensors 713 can be formed as part of the wearable structure 711 of the wearable band 710. In some embodiments, the sensors 713 are flush or substantially flush with the wearable structure 711 such that they do not extend beyond the surface of the wearable structure 711. While flush with the wearable structure 711, the sensors 713 are still configured to contact the user's skin (e.g., via a skin-contacting surface). Alternatively, in some embodiments, the sensors 713 extend beyond the wearable structure 711 a predetermined distance (e.g., 0.1 - 2 mm) to make contact and depress into the user's skin. In some embodiments, the sensors 713 are coupled to an actuator (not shown) configured to adjust an extension height (e.g., a distance from the surface of the wearable structure 711) of the sensors 713 such that the sensors 713 make contact and depress into the user's skin. In some embodiments, the actuators adjust the extension height between 0.01 mm and 1.2 mm. This allows the user to customize the positioning of the sensors 713 to improve the overall comfort of the wearable band 710 when worn while still allowing the sensors 713 to contact the user's skin. In some embodiments, the sensors 713 are indistinguishable from the wearable structure 711 when worn by the user.

The wearable structure 711 can be formed of an elastic material, elastomers, and so forth, configured to be stretched and fitted to be worn by the user. In some embodiments, the wearable structure 711 is a textile or woven fabric. As described above, the sensors 713 can be formed as part of a wearable structure 711. For example, the sensors 713 can be molded into the wearable structure 711 or integrated into a woven fabric (e.g., the sensors 713 can be sewn into the fabric and mimic the pliability of fabric (e.g., the sensors 713 can be constructed from a series of woven strands of fabric)).

The wearable structure 711 can include flexible electronic connectors that interconnect the sensors 713, the electronic circuitry, and/or other electronic components (described below in reference to Figure 7B) that are enclosed in the wearable band 710. In some embodiments, the flexible electronic connectors are configured to interconnect the sensors 713, the electronic circuitry, and/or other electronic components of the wearable band 710 with respective sensors and/or other electronic components of another electronic device (e.g., watch body 720). The flexible electronic connectors are configured to move with the wearable structure 711 such that the user adjustment to the wearable structure 711 (e.g., resizing, pulling, folding) does not stress or strain the electrical coupling of components of the wearable band 710.

As described above, the wearable band 710 is configured to be worn by a user. In particular, the wearable band 710 can be shaped or otherwise manipulated to be worn by a user. For example, the wearable band 710 can be shaped to have a substantially circular shape such that it can be configured to be worn on the user's lower arm or wrist. Alternatively, the wearable band 710 can be shaped to be worn on another body part of the user, such as the user's upper arm (e.g., around a bicep), forearm, chest, legs, etc. The wearable band 710 can include a retaining mechanism 712 (e.g., a buckle, a hook-and-loop fastener) for securing the wearable band 710 to the user's wrist or other body part. While the wearable band 710 is worn by the user, the sensors 713 sense data (referred to as sensor data) from the user's skin. In particular, the sensors 713 of the wearable band 710 obtain (e.g., sense and record) neuromuscular signals.

The sensed data (e.g., sensed neuromuscular signals) can be used to detect and/or determine the user's intention to perform certain motor actions. In particular, the sensors 713 sense and record neuromuscular signals from the user as the user performs muscular activations (movements, gestures, etc.). The detected and/or determined motor actions (e.g., phalange movements (i.e., movements of digits), wrist movements, hand movements, and/or other muscle intentions) can be used to determine control commands or control information (instructions to perform certain commands after the data is sensed) for causing a computing device to perform one or more input commands. For example, the sensed neuromuscular signals can be used to control certain user interfaces displayed on the display 705 of the wrist-wearable device 700 and/or can be transmitted to a device responsible for rendering an artificial-reality environment (e.g., a head-mounted display) in order to perform an action in an associated artificial-reality environment, such as to control the motion of a virtual device displayed to the user. The muscular activations performed by the user can include static gestures such as placing the user's hand palm down on a table; dynamic gestures such as grasping a physical or virtual object; and covert gestures that are imperceptible to another person, such as slightly tensing a joint by co-contracting opposing muscles or using submuscular activations. The muscular activations performed by the user can include symbolic gestures (e.g., gestures mapped to other gestures, interactions, or commands, for example, based on a gesture vocabulary that specifies the mapping of gestures to commands).

The sensor data sensed by the sensors 713 can be used to provide a user with an enhanced interaction with a physical object (e.g., devices communicatively coupled with the wearable band 710) and/or a virtual object in an artificial-reality application generated by an artificial-reality system (e.g., user interface objects presented on the display 705 or another computing device (e.g., a smartphone)).

In some embodiments, the wearable band 710 includes one or more haptic devices 746 (Figure 7B), such as a vibratory haptic actuator, that are configured to provide haptic feedback (e.g., a cutaneous and/or kinesthetic sensation) to the user's skin. The sensors 713, and/or the haptic devices 746 can be configured to operate in conjunction with multiple applications, including, without limitation, health monitoring, social media, games, and artificial reality (e.g., the applications associated with artificial reality).

The wearable band 710 can also include coupling mechanism 716 (e.g., a cradle or a shape of the coupling mechanism can correspond to the shape of the watch body 720 of the wrist-wearable device 700) for detachably coupling a capsule (e.g., a computing unit) or watch body 720 (via a coupling surface of the watch body 720) to the wearable band 710. In particular, the coupling mechanism 716 can be configured to receive a coupling surface proximate to the bottom side of the watch body 720 (e.g., a side opposite to a front side of the watch body 720 where the display 705 is located) such that a user can push the watch body 720 downward into the coupling mechanism 716 to attach the watch body 720 to the coupling mechanism 716. In some embodiments, the coupling mechanism 716 can be configured to receive a top side of the watch body 720 (e.g., a side proximate to the front side of the watch body 720 where the display 705 is located) that is pushed upward into the cradle as opposed to being pushed downward into the coupling mechanism 716. In some embodiments, the coupling mechanism 716 is an integrated component of the wearable band 710 such that the wearable band 710 and the coupling mechanism 716 are a single unitary structure. In some embodiments, the coupling mechanism 716 is a type of frame or shell that allows the watch body 720 coupling surface to be retained within or on the wearable band 710 coupling mechanism 716 (e.g., a cradle, a tracker band, a support base, a clasp).

The coupling mechanism 716 can allow for the watch body 720 to be detachably coupled to the wearable band 710 through a friction fit, magnetic coupling, a rotation-based connector, a shear-pin coupler, a retention spring, one or more magnets, a clip, a pin shaft, a hook-and-loop fastener, or a combination thereof. A user can perform any type of motion to couple the watch body 720 to the wearable band 710 and to decouple the watch body 720 from the wearable band 710. For example, a user can twist, slide, turn, push, pull, or rotate the watch body 720 relative to the wearable band 710, or a combination thereof, to attach the watch body 720 to the wearable band 710 and to detach the watch body 720 from the wearable band 710. Alternatively, as discussed below, in some embodiments, the watch body 720 can be decoupled from the wearable band 710 by actuation of the release mechanism 729.

The wearable band 710 can be coupled with a watch body 720 to increase the functionality of the wearable band 710 (e.g., converting the wearable band 710 into a wrist-wearable device 700, adding an additional computing unit and/or battery to increase computational resources and/or a battery life of the wearable band 710, adding additional sensors to improve sensed data). As described above, the wearable band 710 (and the coupling mechanism 716) is configured to operate independently (e.g., execute functions independently) from the watch body 720. For example, the coupling mechanism 716 can include one or more sensors 713 that contact a user's skin when the wearable band 710 is worn by the user and provide sensor data for determining control commands.

A user can detach the watch body 720 (or capsule) from the wearable band 710 in order to reduce the encumbrance of the wrist-wearable device 700 to the user. For embodiments in which the watch body 720 is removable, the watch body 720 can be referred to as a removable structure, such that in these embodiments the wrist-wearable device 700 includes a wearable portion (e.g., the wearable band 710) and a removable structure (the watch body 720).

Turning to the watch body 720, the watch body 720 can have a substantially rectangular or circular shape. The watch body 720 is configured to be worn by the user on a wrist or another body part. More specifically, the watch body 720 is sized to be easily carried by the user, attached on a portion of the user's clothing, and/or coupled to the wearable band 710 (forming the wrist-wearable device 700). As described above, the watch body 720 can have a shape corresponding to the coupling mechanism 716 of the wearable band 710. In some embodiments, the watch body 720 includes a single release mechanism 729 or multiple release mechanisms (e.g., two release mechanisms 729 positioned on opposing sides of the watch body 720, such as spring-loaded buttons) for decoupling the watch body 720 and the wearable band 710. The release mechanism 729 can include, without limitation, a button, a knob, a plunger, a handle, a lever, a fastener, a clasp, a dial, a latch, or a combination thereof.

A user can actuate the release mechanism 729 by pushing, turning, lifting, depressing, shifting, or performing other actions on the release mechanism 729. Actuation of the release mechanism 729 can release (e.g., decouple) the watch body 720 from the coupling mechanism 716 of the wearable band 710, allowing the user to use the watch body 720 independently from the wearable band 710, and vice versa. For example, decoupling the watch body 720 from the wearable band 710 can allow the user to capture images using a rear-facing camera 725B. Although it is shown positioned at a corner of watch body 720, the release mechanism 729 can be positioned anywhere on watch body 720 that is convenient for the user to actuate. In addition, in some embodiments, the wearable band 710 can include a respective release mechanism for decoupling the watch body 720 from the coupling mechanism 716. In some embodiments, the release mechanism 729 is optional and the watch body 720 can be decoupled from the coupling mechanism 716 as described above (via twisting, rotating, etc.).

The watch body 720 can include one or more peripheral buttons 723 and 727 for performing various operations at the watch body 720. For example, the peripheral buttons 723 and 727 can be used to turn on or wake (e.g., transition from a sleep state to an active state) the display 705, unlock the watch body 720, increase or decrease a volume, increase or decrease a brightness, interact with one or more applications, interact with one or more user interfaces, etc. Additionally, or alternatively, in some embodiments, the display 705 operates as a touch screen and allows the user to provide one or more inputs for interacting with the watch body 720.

In some embodiments, the watch body 720 includes one or more sensors 721. The sensors 721 of the watch body 720 can be the same or distinct from the sensors 713 of the wearable band 710. The sensors 721 of the watch body 720 can be distributed on an inside and/or an outside surface of the watch body 720. In some embodiments, the sensors 721 are configured to contact a user's skin when the watch body 720 is worn by the user. For example, the sensors 721 can be placed on the bottom side of the watch body 720 and the coupling mechanism 716 can be a cradle with an opening that allows the bottom side of the watch body 720 to directly contact the user's skin. Alternatively, in some embodiments, the watch body 720 does not include sensors that are configured to contact the user's skin (e.g., including sensors internal and/or external to the watch body 720 that configured to sense data of the watch body 720 and the watch body 720's surrounding environment). In some embodiments, the sensors 713 are configured to track a position and/or motion of the watch body 720.

The watch body 720 and the wearable band 710 can share data using a wired communication method (e.g., a Universal Asynchronous Receiver/Transmitter (UART), a USB transceiver) and/or a wireless communication method (e.g., near field communication, Bluetooth). For example, the watch body 720 and the wearable band 710 can share data sensed by the sensors 713 and 721, as well as application and device specific information (e.g., active and/or available applications), output devices (e.g., display, speakers), and input devices (e.g., touch screen, microphone, imaging sensors).

In some embodiments, the watch body 720 can include, without limitation, a front-facing camera 725A and/or a rear-facing camera 725B, sensors 721 (e.g., a biometric sensor, an IMU, a heart rate sensor, a saturated oxygen sensor, a neuromuscular signal sensor, an altimeter sensor, a temperature sensor, a bioimpedance sensor, a pedometer sensor, an optical sensor (e.g., imaging sensor 763; Figure 7B), a touch sensor, a sweat sensor). In some embodiments, the watch body 720 can include one or more haptic devices 776 (Figure 7B; a vibratory haptic actuator) that is configured to provide haptic feedback (e.g., a cutaneous and/or kinesthetic sensation) to the user. The sensors 721 and/or the haptic device 776 can also be configured to operate in conjunction with multiple applications including, without limitation, health monitoring applications, social media applications, game applications, and artificial reality applications (e.g., the applications associated with artificial reality).

As described above, the watch body 720 and the wearable band 710, when coupled, can form the wrist-wearable device 700. When coupled, the watch body 720 and wearable band 710 operate as a single device to execute functions (operations, detections, communications, etc.) described herein. In some embodiments, each device is provided with particular instructions for performing the one or more operations of the wrist-wearable device 700. For example, in accordance with a determination that the watch body 720 does not include neuromuscular signal sensors, the wearable band 710 can include alternative instructions for performing associated instructions (e.g., providing sensed neuromuscular signal data to the watch body 720 via a different electronic device). Operations of the wrist-wearable device 700 can be performed by the watch body 720 alone or in conjunction with the wearable band 710 (e.g., via respective processors and/or hardware components) and vice versa. In some embodiments, operations of the wrist-wearable device 700, the watch body 720, and/or the wearable band 710 can be performed in conjunction with one or more processors and/or hardware components of another communicatively coupled device (e.g., the HIPD 900; Figures 9A-9B).

As described below with reference to the block diagram of Figure 7B, the wearable band 710 and/or the watch body 720 can each include independent resources required to independently execute functions. For example, the wearable band 710 and/or the watch body 720 can each include a power source (e.g., a battery), a memory, data storage, a processor (e.g., a central processing unit (CPU)), communications, a light source, and/or input/output devices.

Figure 7B shows block diagrams of a computing system 730 corresponding to the wearable band 710, and a computing system 760 corresponding to the watch body 720, according to some embodiments. A computing system of the wrist-wearable device 700 includes a combination of components of the wearable band computing system 730 and the watch body computing system 760, in accordance with some embodiments.

The watch body 720 and/or the wearable band 710 can include one or more components shown in watch body computing system 760. In some embodiments, a single integrated circuit includes all or a substantial portion of the components of the watch body computing system 760 are included in a single integrated circuit. Alternatively, in some embodiments, components of the watch body computing system 760 are included in a plurality of integrated circuits that are communicatively coupled. In some embodiments, the watch body computing system 760 is configured to couple (e.g., via a wired or wireless connection) with the wearable band computing system 730, which allows the computing systems to share components, distribute tasks, and/or perform other operations described herein (individually or as a single device).

The watch body computing system 760 can include one or more processors 779, a controller 777, a peripherals interface 761, a power system 795, and memory (e.g., a memory 780), each of which are defined above and described in more detail below.

The power system 795 can include a charger input 796, a power-management integrated circuit (PMIC) 797, and a battery 798, each of which is defined above. In some embodiments, a watch body 720 and a wearable band 710 can have respective charger inputs (e.g., charger input 796 and 757), respective batteries (e.g., battery 798 and 759), and can share power with each other (e.g., the watch body 720 can power and/or charge the wearable band 710, and vice versa). Although watch body 720 and/or the wearable band 710 can include respective charger inputs, a single charger input can charge both devices when coupled. The watch body 720 and the wearable band 710 can receive a charge using a variety of techniques. In some embodiments, the watch body 720 and the wearable band 710 can use a wired charging assembly (e.g., power cords) to receive the charge. Alternatively, or in addition, the watch body 720 and/or the wearable band 710 can be configured for wireless charging. For example, a portable charging device can be designed to mate with a portion of watch body 720 and/or wearable band 710 and wirelessly deliver usable power to a battery of watch body 720 and/or wearable band 710. The watch body 720 and the wearable band 710 can have independent power systems (e.g., power system 795 and 756) to enable each to operate independently. The watch body 720 and wearable band 710 can also share power (e.g., one can charge the other) via respective PMICs (e.g., PMICs 797 and 758) that can share power over power and ground conductors and/or over wireless charging antennas.

In some embodiments, the peripherals interface 761 can include one or more sensors 721, many of which listed below are defined above. The sensors 721 can include one or more coupling sensor 762 for detecting when the watch body 720 is coupled with another electronic device (e.g., a wearable band 710). The sensors 721 can include imaging sensors 763 (one or more of the cameras 725, and/or separate imaging sensors 763 (e.g., thermal-imaging sensors)). In some embodiments, the sensors 721 include one or more SpO2 sensors 764. In some embodiments, the sensors 721 include one or more biopotential-signal sensors (e.g., EMG sensors 765, which may be disposed on a user-facing portion of the watch body 720 and/or the wearable band 710). In some embodiments, the sensors 721 include one or more capacitive sensors 766. In some embodiments, the sensors 721 include one or more heart rate sensors 767. In some embodiments, the sensors 721 include one or more IMU sensors 768. In some embodiments, one or more IMU sensors 768 can be configured to detect movement of a user's hand or other location where the watch body 720 is placed or held.

In some embodiments, the peripherals interface 761 includes a near-field communication (NFC) component 769, a global-position system (GPS) component 770, a long-term evolution (LTE) component 771, and/or a Wi-Fi and/or Bluetooth communication component 772. In some embodiments, the peripherals interface 761 includes one or more buttons 773 (e.g., the peripheral buttons 723 and 727 in Figure 7A), which, when selected by a user, cause operation to be performed at the watch body 720. In some embodiments, the peripherals interface 761 includes one or more indicators, such as a light-emitting diode (LED), to provide a user with visual indicators (e.g., message received, low battery, active microphone and/or camera).

The watch body 720 can include at least one display 705 for displaying visual representations of information or data to the user, including user-interface elements and/or three-dimensional virtual objects. The display can also include a touch screen for inputting user inputs such as touch gestures, swipe gestures, and the like. The watch body 720 can include at least one speaker 774 and at least one microphone 775 for providing audio signals to the user and receiving audio input from the user. The user can provide user inputs through the microphone 775 and can also receive audio output from the speaker 774 as part of a haptic event provided by the haptic controller 778. The watch body 720 can include at least one camera 725, including a front-facing camera 725A and a rear-facing camera 725B. The cameras 725 can include ultra-wide-angle cameras, wide-angle cameras, fish-eye cameras, spherical cameras, telephoto cameras, a depth-sensing cameras, or other types of cameras.

The watch body computing system 760 can include one or more haptic controllers 778 and associated componentry (e.g., haptic devices 776) for providing haptic events at the watch body 720 (e.g., a vibrating sensation or audio output in response to an event at the watch body 720). The haptic controllers 778 can communicate with one or more haptic devices 776, such as electroacoustic devices, including a speaker of the one or more speakers 774 and/or other audio components and/or electromechanical devices that convert energy into linear motion such as a motor, solenoid, electroactive polymer, piezoelectric actuator, electrostatic actuator, or other tactile output-generating component (e.g., a component that converts electrical signals into tactile outputs on the device). The haptic controller 778 can provide haptic events that are capable of being sensed by a user of the watch body 720. In some embodiments, the one or more haptic controllers 778 can receive input signals from an application of the applications 782.

In some embodiments, the computer system 730 and/or the computer system 760 can include memory 780, which can be controlled by a memory controller of the one or more controllers 777 and/or one or more processors 779. In some embodiments, software components stored in the memory 780 include one or more applications 782 configured to perform operations at the watch body 720. In some embodiments, the one or more applications 782 include games, word processors, messaging applications, calling applications, web browsers, social media applications, media-streaming applications, financial applications, calendars, clocks, and so forth. In some embodiments, software components stored in the memory 780 include one or more communication interface modules 783 as defined above. In some embodiments, software components stored in the memory 780 include one or more graphics modules 784 for rendering, encoding, and/or decoding audio and/or visual data and one or more data management modules 785 for collecting, organizing, and/or providing access to the data 787 stored in memory 780. In some embodiments, software components stored in the memory 780 include a dimming control module 786A, which is configured to perform the features described above in reference to Figures 1A-5. In some embodiments, one or more of applications 782 and/or one or more modules can work in conjunction with one another to perform various tasks at the watch body 720.

In some embodiments, software components stored in the memory 780 can include one or more operating systems 781 (a Linux-based operating system, an Android operating system, etc.). The memory 780 can also include data 787. The data 787 can include profile data 788A, sensor data 789A, media content data 790, application data 791, and dimming control data 792A that stores data related to the performance of the features described above in reference to Figures 1A-5, such as one or more trigger conditions, device information (e.g., device brightness), predetermined dimming levels, predetermined additive contrast ratios, and/or other data described above in reference to Figures 1A-5.

It should be appreciated that the watch body computing system 760 is an example of a computing system within the watch body 720, and that the watch body 720 can have more or fewer components than shown in the watch body computing system 760, combine two or more components, and/or have a different configuration and/or arrangement of the components. The various components shown in watch body computing system 760 are implemented in hardware, software, firmware, or a combination thereof, including one or more signal-processing and/or application-specific integrated circuits.

Turning to the wearable band computing system 730, one or more components that can be included in the wearable band 710 are shown. The wearable band computing system 730 can include more or fewer components than shown in the watch body computing system 760, combine two or more components, and/or have a different configuration and/or arrangement of some or all of the components. In some embodiments, all or a substantial portion of the components of the wearable band computing system 730 are included in a single integrated circuit. Alternatively, in some embodiments, components of the wearable band computing system 730 are included in a plurality of integrated circuits that are communicatively coupled. As described above, in some embodiments, the wearable band computing system 730 is configured to couple (via a wired or wireless connection) with the watch body computing system 760, which allows the computing systems to share components, distribute tasks, and/or perform other operations described herein (individually or as a single device).

The wearable band computing system 730, similar to the watch body computing system 760, can include one or more processors 749, one or more controllers 747 (including one or more haptics controller 748), a peripherals interface 731 that can include one or more sensors 713 and other peripheral devices, power source (e.g., a power system 756), and memory (e.g., a memory 750) that includes an operating system (e.g., an operating system 751), data (e.g., data 754 including profile data 788B, sensor data 789B, dimming control data 792B), and one or more modules (e.g., a communications interface module 752, a data management module 753, a dimming control module 786B).

The one or more sensors 713 can be analogous to sensors 721 of the computer system 760 and in light of the definitions above. For example, sensors 713 can include one or more coupling sensors 732, one or more SpO2 sensors 734, one or more EMG sensors 735, one or more capacitive sensors 736, one or more heart rate sensors 737, and one or more IMU sensors 738.

The peripherals interface 731 can also include other components analogous to those included in the peripheral interface 761 of the computer system 760, including an NFC component 739, a GPS component 740, an LTE component 741, a Wi-Fi and/or Bluetooth communication component 742, and/or one or more haptic devices 776 as described above in reference to peripherals interface 761. In some embodiments, the peripherals interface 731 includes one or more buttons 743, a display 733, a speaker 744, a microphone 745, and a camera 755. In some embodiments, the peripherals interface 731 includes one or more indicators, such as an LED.

It should be appreciated that the wearable band computing system 730 is an example of a computing system within the wearable band 710, and that the wearable band 710 can have more or fewer components than shown in the wearable band computing system 730, combine two or more components, and/or have a different configuration and/or arrangement of the components. The various components shown in wearable band computing system 730 can be implemented in hardware, software, firmware, or a combination thereof, including one or more signal-processing and/or application-specific integrated circuits.

The wrist-wearable device 700 with respect to Figure 7A is an example of the wearable band 710 and the watch body 720 coupled, so the wrist-wearable device 700 will be understood to include the components shown and described for the wearable band computing system 730 and the watch body computing system 760. In some embodiments, the wrist-wearable device 700 has a split architecture (e.g., a split mechanical architecture or a split electrical architecture) between the watch body 720 and the wearable band 710. In other words, all of the components shown in the wearable band computing system 730 and the watch body computing system 760 can be housed or otherwise disposed in a combined watch device 700 or within individual components of the watch body 720, wearable band 710, and/or portions thereof (e.g., a coupling mechanism 716 of the wearable band 710).

The techniques described above can be used with any device for sensing neuromuscular signals, including the arm-wearable devices of Figures 7A-7B, but could also be used with other types of wearable devices for sensing neuromuscular signals (such as body-wearable or head-wearable devices that might have neuromuscular sensors closer to the brain or spinal column).

In some embodiments, a wrist-wearable device 700 can be used in conjunction with a head-wearable device described below (e.g., AR device 800 and VR device 810) and/or an HIPD 900; the wrist-wearable device 700 can also be configured to be used to allow a user to control an aspect of the artificial reality (e.g., by using EMG-based gestures to control user interface objects in the artificial reality and/or by allowing a user to interact with the touch screen on the wrist-wearable device to also control aspects of the artificial reality). Having thus described example wrist-wearable devices, attention will now be turned to example head-wearable devices, such as the AR device 800 and VR device 810.

**Example Head-Wearable Devices**

Figures 8A-8C show example head-wearable devices, in accordance with some embodiments. Head-wearable devices can include, but are not limited to, AR devices 810 (e.g., AR or smart eyewear devices, such as smart glasses, smart monocles, smart contacts), VR devices 810 (e.g., VR headsets, head-mounted displays (HMDs)), or other ocularly coupled devices. The AR devices 800 and the VR devices 810 are instances of the head-wearable device 114 described in reference to Figures 1A-5 herein, such that the head-wearable device should be understood to have the features of the AR devices 800 and/or the VR devices 810, and vice versa. The AR devices 800 and the VR devices 810 can perform various functions and/or operations associated with navigating through user interfaces and selectively opening applications, as well as the functions and/or operations described above with reference to Figures 1A-5.

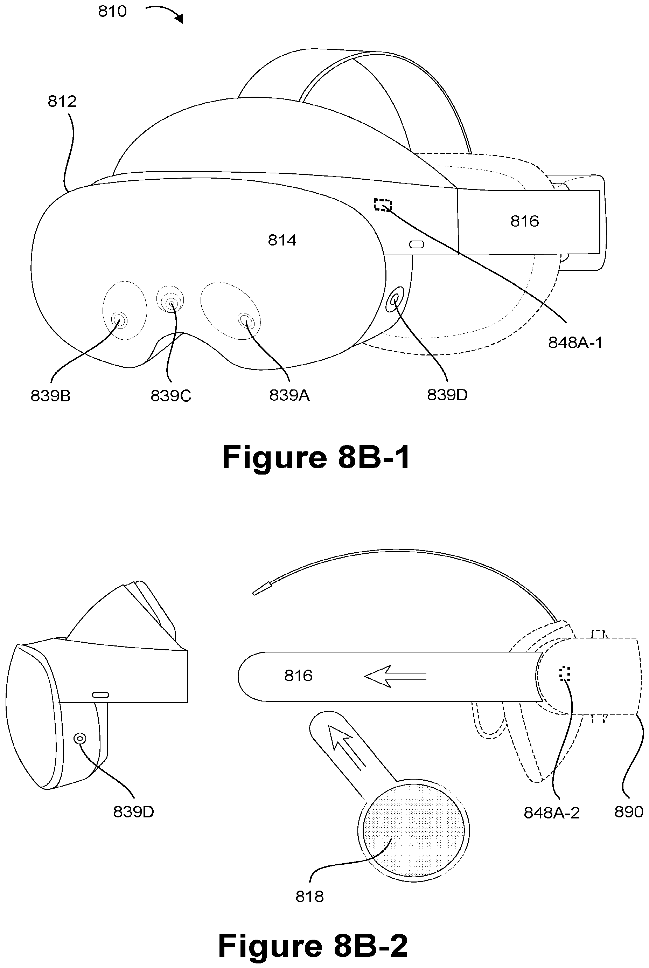

In some embodiments, an AR system (e.g., AR systems 600a-600d; Figures 6A-6D-2) includes an AR device 800 (as shown in Figure 8A) and/or VR device 810 (as shown in Figures 8B-1-B-2). In some embodiments, the AR device 800 and the VR device 810 can include one or more analogous components (e.g., components for presenting interactive artificial-reality environments, such as processors, memory, and/or presentation devices, including one or more displays and/or one or more waveguides), some of which are described in more detail with respect to Figure 8C. The head-wearable devices can use display projectors (e.g., display projector assemblies 807A and 807B) and/or waveguides for projecting representations of data to a user. Some embodiments of head-wearable devices do not include displays.

Figure 8A shows an example visual depiction of the AR device 800 (e.g., which may also be described herein as augmented-reality glasses and/or smart glasses). The AR device 800 can work in conjunction with additional electronic components that are not shown in Figures 8A, such as a wearable accessory device and/or an intermediary processing device, in electronic communication or otherwise configured to be used in conjunction with the AR device 800. In some embodiments, the wearable accessory device and/or the intermediary processing device may be configured to couple with the AR device 800 via a coupling mechanism in electronic communication with a coupling sensor 824, where the coupling sensor 824 can detect when an electronic device becomes physically or electronically coupled with the AR device 800. In some embodiments, the AR device 800 can be configured to couple to a housing (e.g., a portion of frame 804 or temple arms 805), which may include one or more additional coupling mechanisms configured to couple with additional accessory devices. The components shown in Figure 8A can be implemented in hardware, software, firmware, or a combination thereof, including one or more signal-processing components and/or application-specific integrated circuits (ASICs).

The AR device 800 includes mechanical glasses components, including a frame 804 configured to hold one or more lenses (e.g., one or both lenses 806-1 and 806-2). One of ordinary skill in the art will appreciate that the AR device 800 can include additional mechanical components, such as hinges configured to allow portions of the frame 804 of the AR device 800 to be folded and unfolded, a bridge configured to span the gap between the lenses 806-1 and 806-2 and rest on the user's nose, nose pads configured to rest on the bridge of the nose and provide support for the AR device 800, earpieces configured to rest on the user's ears and provide additional support for the AR device 800, temple arms 805 configured to extend from the hinges to the earpieces of the AR device 800, and the like. One of ordinary skill in the art will further appreciate that some examples of the AR device 800 can include none of the mechanical components described herein. For example, smart contact lenses configured to present artificial reality to users may not include any components of the AR device 800.

The lenses 806-1 and 806-2 can be individual displays or display devices (e.g., a waveguide for projected representations). The lenses 806-1 and 806-2 may act together or independently to present an image or series of images to a user. In some embodiments, the lenses 806-1 and 806-2 can operate in conjunction with one or more display projector assemblies 807A and 807B to present image data to a user. While the AR device 800 includes two displays, embodiments of this disclosure may be implemented in AR devices with a single near-eye display (NED) or more than two NEDs.

The AR device 800 includes electronic components, many of which will be described in more detail below with respect to Figure 8C. Some example electronic components are illustrated in Figure 8A, including sensors 823-1, 823-2, 823-3, 823-4, 823-5, and 823-6, which can be distributed along a substantial portion of the frame 804 of the AR device 800. The diverse types of sensors are described below in reference to Figure 8C. The AR device 800 also includes a left camera 839A and a right camera 839B, which are located on different sides of the frame 804. And the eyewear device includes one or more processors 848A and 848B (e.g., an integral microprocessor such as an ASIC) that is embedded in a portion of the frame 804.

Figures 8B-1 and 8B-2 show an example visual depiction of the VR device 810 (a head-mounted display (HMD) 812, also referred to herein as an artificial-reality headset, a head-wearable device, a VR headset). The HMD 812 includes a front body 814 and a frame 816 (e.g., a strap or band) shaped to fit around a user's head. In some embodiments, the front body 814 and/or the frame 816 includes one or more electronic elements for facilitating presentation of and/or interactions with an AR and/or VR system (displays, processors (e.g., processor 848A-1), IMUs, tracking emitter or detectors, sensors, and so forth). In some embodiments, the HMD 812 includes output audio transducers (e.g., an audio transducer 818-1), as shown in Figure 8B-2. In some embodiments, one or more components, such as the output audio transducer(s) 818 and the frame 816, can be configured to attach and detach (e.g., are detachably attachable) to the HMD 812 (e.g., a portion or all of the frame 816 and/or the output audio transducer 818), as shown in Figure 8B-2. In some embodiments, coupling a detachable component to the HMD 812 causes the detachable component to come into electronic communication with the HMD 812. The VR device 810 includes electronic components, many of which will be described in more detail below with respect to Figure 8C.

Figures 8B-1 and 8B-2also show that the VR device 810 one or more cameras, such as the left camera 839A and the right camera 839B, which can be analogous to the left and right cameras on the frame 804 of the AR device 800. In some embodiments, the VR device 810 includes one or more additional cameras (e.g., cameras 839C and 839D), which can be configured to augment image data obtained by the cameras 839A and 839B by providing more information. For example, the camera 839C can be used to supply color information that is not discerned by cameras 839A and 839B. In some embodiments, one or more of the cameras 839A to 839D can include an optional IR cut filter configured to remove IR light from being received at the respective camera sensors.

The VR device 810 can include a housing 890 storing one or more components of the VR device 810 and/or additional components of the VR device 810. The housing 890 can be a modular electronic device configured to couple with the VR device 810 (or an AR device 800) and supplement and/or extend the capabilities of the VR device 810 (or an AR device 800). For example, the housing 890 can include additional sensors, cameras, power sources, processors (e.g., processor 848A-2), and the like to improve and/or increase the functionality of the VR device 810. Examples of the different components included in the housing 890 are described below in reference to Figure 8C.

Alternatively or in addition, in some embodiments, the head-wearable device, such as the VR device 810 and/or the AR device 800, includes, or is communicatively coupled to, another external device (e.g., a paired device) such as an HIPD 9 (discussed below in reference to Figures 9A-9B) and/or an optional neckband. The optional neckband can couple to the head-wearable device via one or more connectors (e.g., wired or wireless connectors). The head-wearable device and the neckband can operate independently without any wired or wireless connection between them. In some embodiments, the components of the head-wearable device and the neckband are located on one or more additional peripheral devices paired with the head-wearable device, the neckband, or some combination thereof. Furthermore, the neckband is intended to represent any suitable type or form of paired device. Thus, the following discussion of neckband may also apply to various other paired devices, such as smart watches, smartphones, wristbands, other wearable devices, hand-held controllers, tablet computers, or laptop computers.

In some situations, pairing an external device such as an intermediary processing device (e.g., an HIPD device 900, an optional neckband, and/or wearable accessory device) with the head-wearable device (e.g., an AR device 800 and/or VR device 810) enables the head-wearable device to achieve a similar form factor of a pair of glasses while still providing sufficient battery and computation power for expanded capabilities. Some, or all, of the battery power, computational resources, and/or additional features of the head-wearable device can be provided by a paired device or shared between a paired device and the head-wearable device, thus reducing the weight, heat profile, and form factor of the head-wearable device overall while allowing the head-wearable devices to retain its desired functionality. For example, the intermediary processing device (e.g., the HIPD 900) can allow components that would otherwise be included in a head-wearable device to be included in the intermediary processing device (and/or a wearable device or accessory device), thereby shifting a weight load from the user's head and neck to one or more other portions of the user's body. In some embodiments, the intermediary processing device has a larger surface area over which to diffuse and disperse heat to the ambient environment. Thus, the intermediary processing device can allow for greater battery and computation capacity than might otherwise have been possible on the head-wearable device standing alone. Because weight carried in the intermediary processing device can be less invasive to a user than weight carried in the head-wearable devices, a user may tolerate wearing a lighter eyewear device and carrying or wearing the paired device for greater lengths of time than if they were wearing a heavier eyewear device standing alone, thereby enabling an artificial-reality environment to be incorporated more fully into a user's day-to-day activities.

In some embodiments, the intermediary processing device is communicatively coupled with the head-wearable device and/or to other devices. The other devices may provide certain functions (e.g., tracking, localizing, depth mapping, processing, storage) to the head-wearable device. In some embodiments, the intermediary processing device includes a controller and a power source. In some embodiments, sensors of the intermediary processing device are configured to sense additional data that can be shared with the head-wearable devices in an electronic format (analog or digital).

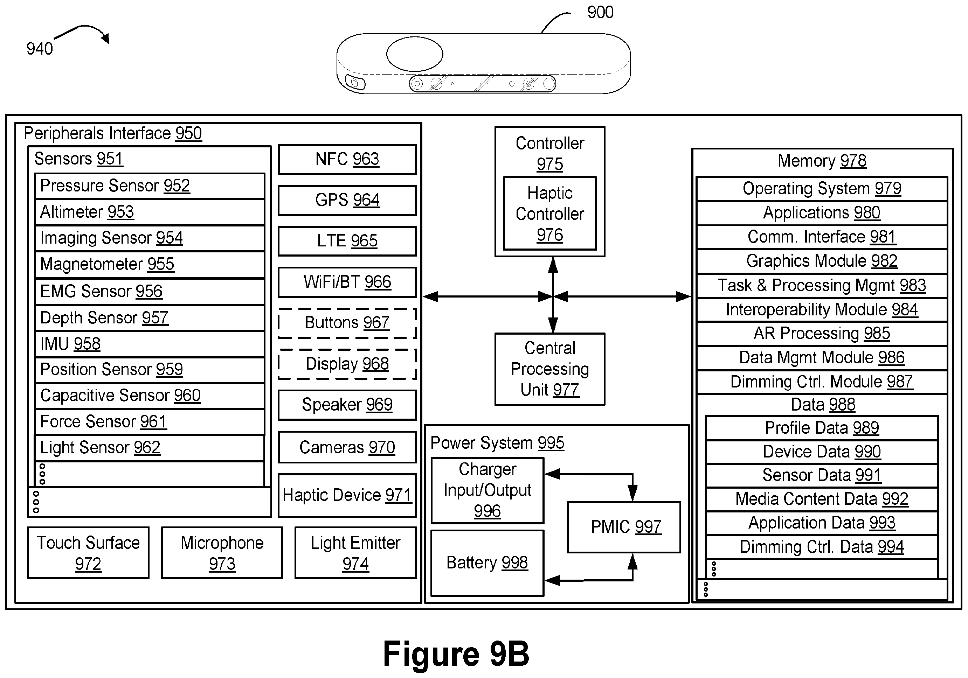

The controller of the intermediary processing device processes information generated by the sensors on the intermediary processing device and/or the head-wearable device. The intermediary processing device, for example, an HIPD 900, can process information generated by one or more of its sensors and/or information provided by other communicatively coupled devices. For example, a head-wearable device can include an IMU, and the intermediary processing device (neckband and/or an HIPD 900) can compute all inertial and spatial calculations from IMUs located on the head-wearable device. Additional examples of processing performed by a communicatively coupled device, such as the HIPD 900, are provided below in reference to Figures 9A and 9B.

Artificial-reality systems may include a variety of types of visual feedback mechanisms. For example, display devices in the AR devices 800 and/or the VR devices 810 may include one or more liquid-crystal displays (LCDs), light-emitting diode (LED) displays, organic LED (OLED) displays, and/or any other suitable type of display screen. Artificial-reality systems may include a single display screen for both eyes or may provide a separate display screen for each eye, which may allow for additional flexibility for varifocal adjustments or for correcting a refractive error associated with the user's vision. Some artificial-reality systems also include optical subsystems having one or more lenses (e.g., conventional concave or convex lenses, Fresnel lenses, or adjustable liquid lenses) through which a user may view a display screen. In addition to or in place of using display screens, some artificial-reality systems include one or more projection systems. For example, display devices in the AR device 800 and/or the VR device 810 may include micro-LED projectors that project light (e.g., using a waveguide) into display devices, such as clear combiner lenses that allow ambient light to pass through. The display devices may refract the projected light toward a user's pupil and may enable a user to simultaneously view both artificial-reality content and the real world. Artificial-reality systems may also be configured with any other suitable type or form of image-projection system. As noted, some AR systems may, instead of blending an artificial reality with actual reality, substantially replace one or more of a user's sensory perceptions of the real world with a virtual experience.

While the example head-wearable devices are respectively described herein as the AR device 800 and the VR device 810, either or both of the example head-wearable devices described herein can be configured to present fully immersive VR scenes in substantially all of a user's field of view, additionally or alternatively to subtler augmented-reality scenes that are presented within a portion less than all of the user's field of view.

In some embodiments, the AR device 800 and/or the VR device 810 can include haptic feedback systems. The haptic feedback systems may provide several types of cutaneous feedback, including vibration, force, traction, shear, texture, and/or temperature. The haptic feedback systems may also provide several types of kinesthetic feedback, such as motion and compliance. The haptic feedback can be implemented using motors, piezoelectric actuators, fluidic systems, and/or a variety of other types of feedback mechanisms. The haptic feedback systems may be implemented independently of other artificial-reality devices, within other artificial-reality devices, and/or in conjunction with other artificial-reality devices (e.g., wrist-wearable devices which may be incorporated into headwear, gloves, bodysuits, handheld controllers, environmental devices (e.g., chairs or floormats), and/or any other type of device or system, such as a wrist-wearable device 700, an HIPD 900, or a smart textile-based garment), and/or other devices described herein.

Figure 8C illustrates a computing system 820 and an optional housing 890, each of which shows components that can be included in a head-wearable device (e.g., the AR device 800 and/or the VR device 810). In some embodiments, more or fewer components can be included in the optional housing 890 depending on practical restraints of the respective head-wearable device being described. Additionally or alternatively, the optional housing 890 can include additional components to expand and/or augment the functionality of a head-wearable device.

In some embodiments, the computing system 820 and/or the optional housing 890 can include one or more peripheral interfaces 822A and 822B, one or more power systems 842A and 842B (including charger input 843, PMIC 844, and battery 845), one or more controllers 846A and 846B (including one or more haptic controllers 847), one or more processors 848A and 848B (as defined above, including any of the examples provided), and memory 850A and 850B, which can all be in electronic communication with each other. For example, the one or more processors 848A and/or 848B can be configured to execute instructions stored in the memory 850A and/or 850B, which can cause a controller of the one or more controllers 846A and/or 846B to cause operations to be performed at one or more peripheral devices of the peripheral interfaces 822A and/or 822B. In some embodiments, each operation described can occur based on electrical power provided by the power system 842A and/or 842B.

In some embodiments, the peripherals interface 822A can include one or more devices configured to be part of the computing system 820, many of which have been defined above and/or described with respect to wrist-wearable devices shown in Figures 7A and 7B. For example, the peripherals interface can include one or more sensors 823A. Some example sensors include one or more coupling sensors 824, one or more acoustic sensors 825, one or more imaging sensors 826, one or more EMG sensors 827, one or more capacitive sensors 828, and/or one or more IMUs 829. In some embodiments, the sensors 823A further include depth sensors 867, light sensors 868 and/or any other types of sensors defined above or described with respect to any other embodiments discussed herein.

In some embodiments, the peripherals interface can include one or more additional peripheral devices, including one or more NFC devices 830, one or more GPS devices 831, one or more LTE devices 832, one or more Wi-Fi and/or Bluetooth devices 833, one or more buttons 834 (e.g., including buttons that are slidable or otherwise adjustable), one or more displays 835A, one or more speakers 836A, one or more microphones 837A, one or more cameras 838A (e.g., including a first camera 839-1 through nth camera 839-n, which are analogous to the left camera 839A and/or the right camera 839B), one or more haptic devices 840, and/or any other types of peripheral devices defined above or described with respect to any other embodiments discussed herein.

The head-wearable devices can include a variety of types of visual feedback mechanisms (e.g., presentation devices). For example, display devices in the AR device 800 and/or the VR device 810 can include one or more liquid-crystal displays (LCDs), light-emitting diode (LED) displays, organic LED (OLED) displays, micro-LEDs, and/or any other suitable types of display screens. The head-wearable devices can include a single display screen (e.g., configured to be seen by both eyes), and/or can provide a separate display screen for each eye, which can allow for additional flexibility for varifocal adjustments and/or for correcting a refractive error associated with the user's vision. Some embodiments of the head-wearable devices also include optical subsystems having one or more lenses (e.g., conventional concave or convex lenses, Fresnel lenses, or adjustable liquid lenses) through which a user can view a display screen. For example, respective displays 835A can be coupled to each of the lenses 806-1 and 806-2 of the AR device 800. The displays 835A coupled to each of the lenses 806-1 and 806-2 can act together or independently to present an image or series of images to a user. In some embodiments, the AR device 800 and/or the VR device 810 would include a single display 835A (e.g., a near-eye display) or more than two displays 835A.

In some embodiments, a first set of one or more displays 835A can be used to present an augmented-reality environment and a second set of one or more display devices 835A can be used to present a virtual-reality environment. In some embodiments, one or more waveguides are used in conjunction with presenting artificial-reality content to the user of the AR device 800 and/or the VR device 810 (e.g., as a means of delivering light from a display projector assembly and/or one or more displays 835A to the user's eyes). In some embodiments, one or more waveguides are fully or partially integrated into the AR device 800 and/or the VR device 810. Additionally, or alternatively to display screens, some artificial-reality systems include one or more projection systems. For example, display devices in the AR device 800 and/or the VR device 810 can include micro-LED projectors that project light (e.g., using a waveguide) into display devices, such as clear combiner lenses that allow ambient light to pass through. The display devices can refract the projected light toward a user's pupil and can enable a user to simultaneously view both artificial-reality content and the real world. The head-wearable devices can also be configured with any other suitable type or form of image-projection system. In some embodiments, one or more waveguides are provided additionally or alternatively to the one or more displays 835A.

In some embodiments of the head-wearable devices, ambient light and/or a real-world live view (e.g., a live feed of the surrounding environment that a user would normally see) can be passed through a display element of a respective head-wearable device presenting aspects of the AR system. In some embodiments, ambient light and/or the real-world live view can be passed through a portion less than all of an AR environment presented within a user's field of view (e.g., a portion of the AR environment co-located with a physical object in the user's real-world environment that is within a designated boundary (e.g., a guardian boundary) configured to be used by the user while they are interacting with the AR environment). For example, a visual user interface element (e.g., a notification user interface element) can be presented at the head-wearable device, and an amount of ambient light and/or the real-world live view (e.g., 15%-50% of the ambient light and/or the real-world live view) can be passed through the user interface element such that the user can distinguish at least a portion of the physical environment over which the user interface element is being displayed.

The head-wearable devices can include one or more external displays 835A for presenting information to users. For example, an external display 835A can be used to show a current battery level, network activity (e.g., connected, disconnected), current activity (e.g., playing a game, in a call, in a meeting, watching a movie), and/or other relevant information. In some embodiments, the external displays 835A can be used to communicate with others. For example, a user of the head-wearable device can cause the external displays 835A to present a "do not disturb" notification. The external displays 835A can also be used by the user to share any information captured by the one or more components of the peripherals interface 822A and/or generated by head-wearable device (e.g., during operation and/or performance of one or more applications).

The memory 850A can include instructions and/or data executable by one or more processors 848A (and/or processors 848B of the housing 890) and/or a memory controller of the one or more controllers 846A (and/or controller 846B of the housing 890). The memory 850A can include one or more operating systems 851; one or more applications 852; one or more communication interface modules 853A; one or more graphics modules 854A; one or more AR processing modules 855A; one or more dimming control modules 856, configured to perform the features described above in reference to Figures 1A-5; and/or any other types of modules or components defined above or described with respect to any other embodiments discussed herein.

The data 860 stored in memory 850A can be used in conjunction with one or more of the applications and/or programs discussed above. The data 860 can include profile data 861; sensor data 862; media content data 863; AR application data 864; dimming control data 865 for storing data related to the performance of the features described above in reference to Figures 1A-5, such as one or more trigger conditions, device information (e.g., device brightness), predetermined dimming levels, predetermined additive contrast ratios, and/or other data described above in reference to Figures 1A-5; and/or any other type of data defined above or described with respect to any other embodiments discussed herein.

In some embodiments, the controller 846A of the head-wearable devices processes information generated by the sensors 823A on the head-wearable devices and/or another component of the head-wearable devices and/or communicatively coupled with the head-wearable devices (e.g., components of the housing 890, such as components of peripherals interface 822B). For example, the controller 846A can process information from the acoustic sensors 825 and/or image sensors 826. For each detected sound, the controller 846A can perform a direction-of-arrival (DOA) estimation to estimate a direction from which the detected sound arrived at a head-wearable device. As one or more of the acoustic sensors 825 detects sounds, the controller 846A can populate an audio data set with the information (e.g., represented by sensor data 862).

In some embodiments, a physical electronic connector can convey information between the head-wearable devices and another electronic device, and/or between one or more processors 848A of the head-wearable devices and the controller 846A. The information can be in the form of optical data, electrical data, wireless data, or any other transmittable data form. Moving the processing of information generated by the head-wearable devices to an intermediary processing device can reduce weight and heat in the eyewear device, making it more comfortable and safer for a user. In some embodiments, an optional accessory device (e.g., an electronic neckband or an HIPD 900) is coupled to the head-wearable devices via one or more connectors. The connectors can be wired or wireless connectors and can include electrical and/or non-electrical (e.g., structural) components. In some embodiments, the head-wearable devices and the accessory device can operate independently without any wired or wireless connection between them.

The head-wearable devices can include several types of computer vision components and subsystems. For example, the AR device 800 and/or the VR device 810 can include one or more optical sensors such as two-dimensional (2D) or three-dimensional (3D) cameras, time-of-flight depth sensors, single-beam or sweeping laser rangefinders, 3D LiDAR sensors, and/or any other suitable type or form of optical sensor. A head-wearable device can process data from one or more of these sensors to identify a location of a user and/or aspects of the use's real-world physical surroundings, including the locations of real-world objects within the real-world physical surroundings. In some embodiments, the methods described herein are used to map the real world, to provide a user with context about real-world surroundings, and/or to generate interactable virtual objects (which can be replicas or digital twins of real-world objects that can be interacted with in AR environment), among a variety of other functions. For example, Figures 8B-1 and 8B-2 show the VR device 810 having cameras 839A-839D, which can be used to provide depth information for creating a voxel field and a two-dimensional mesh to provide object information to the user to avoid collisions.

The optional housing 890 can include analogous components to those described above with respect to the computing system 820. For example, the optional housing 890 can include a respective peripherals interface 822B including more or fewer components to those described above with respect to the peripherals interface 822A. As described above, the components of the optional housing 890 can be used to augment and/or expand on the functionality of the head-wearable devices. For example, the optional housing 890 can include respective sensors 823B, speakers 836B, displays 835B, microphones 837B, cameras 838B, and/or other components to capture and/or present data. Similarly, the optional housing 890 can include one or more processors 848B, controllers 846B, and/or memory 850B (including respective communication interface modules 853B; one or more graphics modules 854B; one or more AR processing modules 855B, one or more dimming control module 856, dimming control data 865, etc.) that can be used individually and/or in conjunction with the components of the computing system 820.

The techniques described above in Figures 8A-8C can be used with different head-wearable devices. In some embodiments, the head-wearable devices (e.g., the AR device 800 and/or the VR device 810) can be used in conjunction with one or more wearable devices such as a wrist-wearable device 700 (or components thereof) as well as an HIPD 900. Having thus described the example head-wearable devices, attention will now be turned to example handheld intermediary processing devices, such as HIPD 900.

## Example Handheld Intermediary Processing Devices

Figures 9A and 9B illustrate an example handheld intermediary processing device (HIPD) 900, in accordance with some embodiments. The HIPD 900 is an instance of the intermediary device described in reference to Figures 6A and 6B herein. The HIPD 900 can perform various functions and/or operations associated with navigating through user interfaces and selectively opening applications, as well as the functions and/or operations described above with reference to Figures 1A-5.

Figure 9A shows a top view 905 and a side view 925 of the HIPD 900. The HIPD 900 is configured to communicatively couple with one or more wearable devices (or other electronic devices) associated with a user. For example, the HIPD 900 is configured to communicatively couple with a user's wrist-wearable device 700 (or components thereof, such as the watch body 720 and the wearable band 710), AR device 800, and/or VR device 810. The HIPD 900 can be configured to be held by a user (e.g., as a handheld controller), carried on the user's person (e.g., in their pocket, in their bag), placed in proximity of the user (e.g., placed on their desk while seated at their desk, on a charging dock), and/or placed at or within a predetermined distance from a wearable device or other electronic device (where, in some embodiments, the predetermined distance is the maximum distance (e.g., 10 meters) at which the HIPD 900 can successfully be communicatively coupled with an electronic device, such as a wearable device).

The HIPD 900 can perform various functions independently and/or in conjunction with one or more wearable devices (e.g., wrist-wearable device 700, AR device 800, VR device 810). The HIPD 900 is configured to increase and/or improve the functionality of communicatively coupled devices such as the wearable devices. The HIPD 900 is configured to perform one or more functions or operations associated with interacting with user interfaces and applications of communicatively coupled devices, interacting with an AR environment, interacting with a VR environment, and/or operating as a human-machine interface controller, as well as functions and/or operations described above with reference to Figures 1A-5. Additionally, as will be described in more detail below, functionality and/or operations of the HIPD 900 can include, without limitation, task offloading and/or handoffs; thermals offloading and/or handoffs; 6 degrees of freedom (6DoF) raycasting and/or gaming (e.g., using imaging devices or cameras 914A and 914B, which can be used for simultaneous localization and mapping (SLAM) and/or with other image processing techniques); portable charging; messaging; image capturing via one or more imaging devices or cameras (e.g., cameras 922A and 922B); sensing user input (e.g., sensing a touch on a multi-touch input surface 902); wireless communications and/or interlining (e.g., cellular, near field, Wi-Fi, personal area network); location determination; financial transactions; providing haptic feedback; alarms; notifications; biometric authentication; health monitoring; sleep monitoring; etc. The above-example functions can be executed independently in the HIPD 900 and/or in communication between the HIPD 900 and another wearable device described herein. In some embodiments, functions can be executed on the HIPD 900 in conjunction with an AR environment. As the skilled artisan will appreciate upon reading the descriptions provided herein, the novel HIPD 900 described herein can be used with any type of suitable AR environment.

While the HIPD 900 is communicatively coupled with a wearable device and/or other electronic device, the HIPD 900 is configured to perform one or more operations initiated at the wearable device and/or the other electronic device. In particular, one or more operations of the wearable device and/or the other electronic device can be offloaded to the HIPD 900 to be performed. The HIPD 900 performs the one or more operations of the wearable device and/or the other electronic device and provides data corresponded to the completed operations to the wearable device and/or the other electronic device. For example, a user can initiate a video stream using AR device 800 and back-end tasks associated with performing the video stream (e.g., video rendering) can be offloaded to the HIPD 900, which the HIPD 900 performs and provides corresponding data to the AR device 800 to perform remaining front-end tasks associated with the video stream (e.g., presenting the rendered video data via a display of the AR device 800). In this way, the HIPD 900, which has more computational resources and greater thermal headroom than a wearable device, can perform computationally intensive tasks for the wearable device, improving performance of an operation performed by the wearable device.

The HIPD 900 includes a multi-touch input surface 902 on a first side (e.g., a front surface) that is configured to detect one or more user inputs. In particular, the multi-touch input surface 902 can detect single-tap inputs, multi-tap inputs, swipe gestures and/or inputs, force-based and/or pressure-based touch inputs, held taps, and the like. The multi-touch input surface 902 is configured to detect capacitive touch inputs and/or force (and/or pressure) touch inputs. The multi-touch input surface 902 includes a first touch-input surface 904 defined by a surface depression, and a second touch-input surface 906 defined by a substantially planar portion. The first touch-input surface 904 can be disposed adjacent to the second touch-input surface 906. In some embodiments, the first touch-input surface 904 and the second touch-input surface 906 can be different dimensions, shapes, and/or cover different portions of the multi-touch input surface 902. For example, the first touch-input surface 904 can be substantially circular and the second touch-input surface 906 substantially rectangular. In some embodiments, the surface depression of the multi-touch input surface 902 is configured to guide user handling of the HIPD 900. In particular, the surface depression is configured such that the user holds the HIPD 900 upright when held in a single hand (e.g., such that the imaging devices or cameras 914A and 914B are pointed toward a ceiling or the sky). Additionally, the surface depression is configured such that the user's thumb rests within the first touch-input surface 904.

In some embodiments, the different touch-input surfaces include a plurality of touch-input zones. For example, the second touch-input surface 906 includes at least a first touch-input zone 908 within a second touch-input zone 906 and a third touch-input zone 910 within the first touch-input zone 908. In some embodiments, one or more of the touch-input zones are optional and/or user-defined (e.g., a user can specific a touch-input zone based on their preferences). In some embodiments, each touch-input surface and/or touch-input zone is associated with a predetermined set of commands. For example, a user input detected within the first touch-input zone 908 causes the HIPD 900 to perform a first command and a user input detected within the second touch-input zone 906 causes the HIPD 900 to perform a second command distinct from the first. In some embodiments, different touch-input surfaces and/or touch-input zones are configured to detect one or more types of user inputs. The different touch-input surfaces and/or touch-input zones can be configured to detect the same or distinct types of user inputs. For example, the first touch-input zone 908 can be configured to detect force touch inputs (e.g., a magnitude at which the user presses down) and capacitive touch inputs, and the second touch-input zone 906 can be configured to detect capacitive touch inputs.

The HIPD 900 includes one or more sensors 951 for sensing data used in the performance of one or more operations and/or functions. For example, the HIPD 900 can include an IMU sensor that is used in conjunction with cameras 914 for three-dimensional object manipulation (enlarging, moving, destroying an object, for instance) in an AR or VR environment. Non-limiting examples of the sensors 951 included in the HIPD 900 include a light sensor, a magnetometer, a depth sensor, a pressure sensor, and a force sensor. Additional examples of the sensors 951 are provided below in reference to Figure 9B.

The HIPD 900 can include one or more light indicators 912 to provide one or more notifications to the user. In some embodiments, the light indicators are LEDs or other types of illumination devices. The light indicators 912 can operate as a privacy light to notify the user and/or others near the user that an imaging device and/or microphone are active. In some embodiments, a light indicator is positioned adjacent to one or more touch-input surfaces. For example, a light indicator can be positioned around the first touch-input surface 904. The light indicators can be illuminated in assorted colors and/or patterns to provide the user with one or more notifications and/or information about the device. For example, a light indicator positioned around the first touch-input surface 904 can flash when the user receives a notification (e.g., a message), change red when the HIPD 900 is out of power, operate as a progress bar (e.g., a light ring that is closed when a task is completed (0% to 100%)), or operate as a volume indicator.

In some embodiments, the HIPD 900 includes one or more additional sensors on another surface. For example, as shown in Figure 9A, HIPD 900 includes a set of one or more sensors (e.g., sensor set 920) on an edge of the HIPD 900. The sensor set 920, when positioned on an edge of the HIPD 900, can be positioned at a predetermined tilt angle (e.g., 26 degrees), which allows the sensor set 920 to be angled toward the user when placed on a desk or other flat surface. Alternatively, in some embodiments, the sensor set 920 is positioned on a surface opposite the multi-touch input surface 902 (e.g., a back surface). The one or more sensors of the sensor set 920 are discussed in detail below.

The side view 925 of the of the HIPD 900 shows the sensor set 920 and camera 914B. The sensor set 920 includes one or more cameras 922A and 922B, a depth projector 924, an ambient light sensor 928, and a depth receiver 930. In some embodiments, the sensor set 920 includes a light indicator 926. The light indicator 926 can operate as a privacy indicator to let the user and/or those around them know that a camera and/or microphone is active. The sensor set 920 is configured to capture a user's facial expression such that the user can puppet a custom avatar (e.g., showing emotions such as smiles or laughter on the avatar or a digital representation of the user). The sensor set 920 can be configured as a side stereo RGB system, a rear indirect time-of-flight (iToF) system, or a rear stereo RGB system. As the skilled artisan will appreciate upon reading the descriptions provided herein, the novel HIPD 900 described herein can use different sensor set 920 configurations and/or sensor set 920 placement.

In some embodiments, the HIPD 900 includes one or more haptic devices 971 (Figure 9B; e.g., a vibratory haptic actuator) that are configured to provide haptic feedback (e.g., kinesthetic sensation). The sensors 951 and/or the haptic devices 971 can be configured to operate in conjunction with multiple applications and/or communicatively coupled devices, including, without limitation, wearable devices, health monitoring applications, social media applications, game applications, and artificial reality applications (e.g., the applications associated with artificial reality).

The HIPD 900 is configured to operate without a display. However, in optional embodiments, the HIPD 900 can include a display 968 (Figure 9B). The HIPD 900 can also income one or more optional peripheral buttons 967 (Figure 9B). For example, the peripheral buttons 967 can be used to turn on or turn off the HIPD 900. Further, the HIPD 900 housing can be formed of polymers and/or elastomer elastomers. The HIPD 900 can be configured to have a non-slip surface to allow the HIPD 900 to be placed on a surface without requiring a user to watch over the HIPD 900. In other words, the HIPD 900 is designed such that it would not easily slide off a surface. In some embodiments, the HIPD 900 includes one or magnets to couple the HIPD 900 to another surface. This allows the user to mount the HIPD 900 to different surfaces and provide the user with greater flexibility in use of the HIPD 900.

As described above, the HIPD 900 can distribute and/or provide instructions for performing the one or more tasks at the HIPD 900 and/or a communicatively coupled device. For example, the HIPD 900 can identify one or more back-end tasks to be performed by the HIPD 900 and one or more front-end tasks to be performed by a communicatively coupled device. While the HIPD 900 is configured to offload and/or hand off tasks of a communicatively coupled device, the HIPD 900 can perform both back-end and front-end tasks, e.g., via one or more processors such as CPU 977 (Figure 9B). The HIPD 900 can, without limitation, be used to perform augmenting calling (receiving and/or sending 3D or 2.5D live volumetric calls, live digital human representation calls, and/or avatar calls), discreet messaging, 6DoF portrait/landscape gaming, AR/VR object manipulation, AR/VR content display (e.g., presenting content via a virtual display), and/or other AR/VR interactions. The HIPD 900 can perform the above operations alone or in conjunction with a wearable device (or other communicatively coupled electronic device).

Figure 9B shows block diagrams of a computing system 940 of the HIPD 900, in accordance with some embodiments. The HIPD 900, described in detail above, can include one or more components shown in HIPD computing system 940. The HIPD 900 will be understood to include the components shown and described below for the HIPD computing system 940. In some embodiments, all or a substantial portion of the components of the HIPD computing system 940 are included in a single integrated circuit. Alternatively, in some embodiments, components of the HIPD computing system 940 are included in a plurality of integrated circuits that are communicatively coupled.

The HIPD computing system 940 can include a processor (e.g., a CPU 977, a GPU, and/or a CPU with integrated graphics), a controller 975, a peripherals interface 950 that includes one or more sensors 951 and other peripheral devices, a power source (e.g., a power system 995), and memory (e.g., memory 978) that includes an operating system (e.g., an operating system 979), data (e.g., data 988), one or more applications (e.g., applications 980), and one or more modules (e.g., a communications interface module 981, a graphics module 982, a task and processing management module 983, an interoperability module 984, an AR processing module 985, a data management module 986, or a dimming control module 987). The HIPD computing system 940 further includes a power system 995 that includes a charger input and output 996, a PMIC 997, and a battery 998, all of which are defined above.

In some embodiments, the peripherals interface 950 can include one or more sensors 951. The sensors 951 can include sensors analogous to those described above in reference to Figures 7B. For example, the sensors 951 can include imaging sensors 954, (optional) EMG sensors 956, IMU sensors 958, and capacitive sensors 960. In some embodiments, the sensors 951 can include one or more pressure sensors 952 for sensing pressure data, an altimeter 953 for sensing an altitude of the HIPD 900, a magnetometer 955 for sensing a magnetic field, a depth sensor 957 (or a time-of-flight sensor) for determining a difference between the camera and the subject of an image, a position sensor 959 (e.g., a flexible position sensor) for sensing a relative displacement or position change of a portion of the HIPD 900, a force sensor 961 for sensing a force applied to a portion of the HIPD 900, and a light sensor 962 (e.g., an ambient light sensor) for detecting an amount of lighting. The sensors 951 can include one or more sensors not shown in Figure 9B.

Analogous to the peripherals described above in reference to Figures 7B, the peripherals interface 950 can also include an NFC component 963, a GPS component 964, an LTE component 965, a Wi-Fi and/or Bluetooth communication component 966, a speaker 969, a haptic device 971, and a microphone 973. As described above in reference to Figure 9A, the HIPD 900 can optionally include a display 968 and/or one or more buttons 967. The peripherals interface 950 can further include one or more cameras 970, touch surfaces 972, and/or one or more light emitters 974. The multi-touch input surface 902 described above in reference to Figure 9A is an example of touch surface 972. The light emitters 974 can be one or more LEDs, lasers, etc. and can be used to project or present information to a user. For example, the light emitters 974 can include light indicators 912 and 926 described above in reference to Figure 9A. The cameras 970 (e.g., cameras 914A, 914B, and 922 described above in Figure 9A) can include one or more wide-angle cameras, fish-eye cameras, spherical cameras, compound eye cameras (e.g., stereo and multi cameras), depth cameras, RGB cameras, ToF cameras, RGB-D cameras (depth and ToF cameras), and/or other available cameras. Cameras 970 can be used for SLAM; 6DoF raycasting, gaming, object manipulation, and/or other rendering; facial recognition and facial expression recognition, etc.

Similar to the watch body computing system 760 and the watchband computing system 730 described above in reference to Figure 7B, the HIPD computing system 940 can include one or more haptic controllers 976 and associated componentry (e.g., haptic devices 971) for providing haptic events at the HIPD 900.

Memory 978 can include high-speed random-access memory and/or non-volatile memory, such as one or more magnetic disk storage devices, flash memory devices, or other non-volatile solid-state memory devices. Access to the memory 978 by other components of the HIPD 900, such as the one or more processors and the peripherals interface 950, can be controlled by a memory controller of the controllers 975.

In some embodiments, software components stored in the memory 978 include, analogous to the software components described above in reference to Figure 7B, one or more operating systems 979, one or more applications 980, one or more communication interface modules 981, one or more graphics modules 982, or one or more data management modules 985. The software components stored in the memory 978 can also include a dimming control module 987, which is configured to perform the features described above in reference to Figures 1A-5.

In some embodiments, software components stored in the memory 978 include a task and processing management module 983 for identifying one or more front-end and back-end tasks associated with an operation executed by the user, performing one or more front-end and/or back-end tasks, and/or providing instructions to one or more communicatively coupled devices that cause performance of the one or more front-end and/or back-end tasks. In some embodiments, the task and processing management module 983 uses data 988 (e.g., device data 990) to distribute the one or more front-end and/or back-end tasks based on communicatively coupled devices' computing resources, available power, thermal headroom, ongoing operations, and/or other factors. For example, the task and processing management module 983 can cause the performance of one or more back-end tasks (of an operation performed at communicatively coupled AR device 800) at the HIPD 900 in accordance with a determination that the operation is utilizing a predetermined amount (e.g., at least 70%) of computing resources available at the AR device 800.

In some embodiments, software components stored in the memory 978 include an interoperability module 984 for exchanging and utilizing information received and/or provided to distinct communicatively coupled devices. The interoperability module 984 allows for different systems, devices, and/or applications to connect and communicate in a coordinated way without user input. In some embodiments, software components stored in the memory 978 include an AR module 985 that is configured to process signals based at least on sensor data for use in an AR and/or VR environment. For example, the AR processing module 985 can be used for 3D object manipulation, gesture recognition, facial and facial expression recognition, etc.

The memory 978 can also include data 988, including structured data. In some embodiments, the data 988 can include profile data 989, device data 990 (including device data of one or more devices communicatively coupled with the HIPD 900, such as device type, hardware, software, or configurations), sensor data 991, media content data 992, application data 993, and dimming control data 994 that stores data related to the performance of the features described above in reference to Figures 1A-5.

It should be appreciated that the HIPD computing system 940 is an example of a computing system within the HIPD 900, and that the HIPD 900 can have more or fewer components than shown in the HIPD computing system 940, combine two or more components, and/or have a different configuration and/or arrangement of the components. The various components shown in HIPD computing system 940 are implemented in hardware, software, firmware, or a combination thereof, including one or more signal-processing and/or application-specific integrated circuits.

The techniques described above in Figure 9A-9B can be used with any device used as a human-machine interface controller. In some embodiments, an HIPD 900 can be used in conjunction with one or more wearable devices such as a head-wearable device (e.g., AR device 800 and VR device 810) and/or a wrist-wearable device 700 (or components thereof).

Any data collection performed by the devices described herein and/or any devices configured to perform or cause the performance of the different embodiments described above in reference to any of the Figures, hereinafter the "devices," is done with user consent and in a manner that is consistent with all applicable privacy laws. Users are given options to allow the devices to collect data, as well as the option to limit or deny collection of data by the devices. A user is able to opt in or opt out of any data collection at any time. Further, users are given the option to request the removal of any collected data.

It will be understood that, although the terms "first," "second," and so forth may be used herein to describe various elements, these elements should not be limited by these terms. These terms are only used to distinguish one element from another.

The terminology used herein is for the purpose of describing particular embodiments only and is not intended to be limiting of the claims. As used in the description of the embodiments and the appended claims, the singular forms "a," "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components but do not preclude the presence or addition of one or more other features, integers, steps, operations, elements, components, and/or groups thereof.

As used herein, the term "if' can be construed to mean "when" or "upon" or "in response to determining" or "in accordance with a determination" or "in response to detecting" that a stated condition precedent is true, depending on the context. Similarly, the phrase "if it is determined [that a stated condition precedent is true]" or "if [a stated condition precedent is true]" or "when [a stated condition precedent is true]" can be construed to mean "upon determining" or "in response to determining" or "in accordance with a determination" or "upon detecting" or "in response to detecting" that the stated condition precedent is true, depending on the context.

The foregoing description, for purpose of explanation, has been described with reference to specific embodiments. However, the illustrative discussions above are not intended to be exhaustive or to limit the claims to the precise forms disclosed. Many modifications and variations are possible in view of the above teachings. The embodiments were chosen and described in order to best explain principles of operation and practical applications, to thereby enable others skilled in the art.

**Claims**

1. A non-transitory computer-readable storage medium comprising instructions that, when executed by one or more processors of a head-wearable device, cause the head-wearable device to cause the performance of:
   while a user is wearing augmented-reality glasses:

   obtaining first light information measured via a first sensor positioned to receive light after it travels through a dimmable element of the augmented-reality glasses;
   obtaining second light information measured via a second sensor positioned to receive light that has not travelled through the dimmable element of the augmented-reality glasses; and
   actively adjusting a dimming level of the dimmable element based on a comparison between the first and second light information.

2. The non-transitory computer-readable storage medium of claim 1, wherein:

   the dimmable element is a first dimmable element associated with a first lens of the augmented-reality glasses for a first eye of the user;
   the augmented-reality glasses also comprise a second dimmable element associated with a second lens of the augmented-reality glasses for a second eye of the user; and
   actively adjusting comprises electronically adjusting the dimming level only for the first dimmable element.

3. The non-transitory computer-readable storage medium of claim 2, wherein:

the actively adjusting comprises electronically adjusting the first dimmable element to a first dimming level and the second dimmable element to a second dimming level, distinct from the first dimming level.

4. The non-transitory computer-readable storage medium of claim 2 or claim 3, wherein the instructions that, when executed by the head-wearable device, also cause the head-wearable device to:
before actively adjusting the dimming level:

in accordance with a determination that artificial-reality content is being presented via the first lens, determine that the first dimmable element requires a dimming-level adjustment to visibly present the artificial-reality content at the first lens;
wherein the actively adjusting the dimming level is performed for the first dimmable element in response to the determination that the first dimmable element requires a dimming-level adjustment to visibly present the artificial-reality content at the first lens.

5. The non-transitory computer-readable storage medium of any preceding claim, wherein:
the dimmable element comprises (i) a first dimmable element associated with a first lens of the augmented-reality glasses for a first eye of the user and (ii) a second dimmable element associated with a second lens of the augmented-reality glasses for a second eye of the user, and the actively adjusting occurs substantially simultaneously for both of the first and second dimmable elements.

6. The non-transitory computer-readable storage medium of any preceding claim, wherein actively adjusting the dimming level occurs in response to detecting a trigger condition indicating that the dimmable element requires an adjustment to the dimming level;
optionally, wherein the trigger condition is determined to be satisfied when an additive contrast ratio for the augmented-reality glasses falls below a threshold amount.

7. The non-transitory computer-readable storage medium of any preceding claim, wherein:
the augmented-reality glasses comprise a dimmable element positioned farther away from the user compared to a display-presentation element of the augmented-reality glasses.

8. The non-transitory computer-readable storage medium of any preceding claim, wherein the first sensor is a disparity sensor configured to output first light information by comparing light from one or more waveguides.

9. A method of active-dimming control for augmented-reality glasses, the method comprising:

while a user is wearing augmented-reality glasses:

obtaining first light information measured via a first sensor positioned to receive light after it travels through a dimmable element of the augmented-reality glasses;
obtaining second light information measured via a second sensor positioned to receive light that has not travelled through the dimmable element of the augmented-reality glasses; and
actively adjusting a dimming level of the dimmable element based on a comparison between the first and second light information.

10. The method of claim 9, wherein:

the dimmable element is a first dimmable element associated with a first lens of the augmented-reality glasses for a first eye of the user;
the augmented-reality glasses also comprise a second dimmable element associated with a second lens of the augmented-reality glasses for a second eye of the user; and
actively adjusting comprises electronically adjusting the dimming level only for the first dimmable element;

optionally, wherein:
the actively adjusting comprises electronically adjusting the first dimmable element to a first dimming level and the second dimmable element to a second dimming level, distinct from the first dimming level;
optionally, the method further comprising:

before actively adjusting the dimming level
in accordance with a determination that artificial-reality content is being presented via the first lens, determining that the first dimmable element requires a dimming-level adjustment to allow for proper viewing of the artificial-reality content;
wherein the actively adjusting the dimming level is performed for the first dimmable element in response to the determining that the first dimmable element requires a dimming-level adjustment to allow for proper viewing of the artificial-reality content.

11. The method of claim 9 or claim 10, wherein:
the dimmable element comprises (i) a first dimmable element associated with a first lens of the augmented-reality glasses for a first eye of the user and (ii) a second dimmable element associated with a second lens of the augmented-reality glasses for a second eye of the user, and the actively adjusting occurs substantially simultaneously for both of the first and second dimmable elements.

12. The method of any one of claims 9 to 11, wherein actively adjusting the dimming level occurs in response to detecting a trigger condition indicating that the dimmable element requires an adjustment to the dimming level;
optionally, wherein the trigger condition is determined to be satisfied when an additive contrast ratio for the augmented-reality glasses falls below a threshold amount.

13. The method of any one of claims 9 to 12, wherein:

the augmented-reality glasses comprise a dimmable element positioned farther away from the user compared to a display-presentation element of the augmented-reality glasses; and/or wherein the first sensor is a disparity sensor configured to output first light information by comparing light from one or more waveguides.

14. A head-wearable device, comprising:

one or more sensors;
one or more imaging devices;
two lenses;
memory, comprising instructions for performing one or more operations; and
one or more processors configured to execute the instructions to cause the performance of:
while a user is wearing augmented-reality glasses:

obtaining first light information measured via a first sensor of the one or more sensors positioned to receive light after it travels through a dimmable element of the augmented-reality glasses;
obtaining second light information measured via a second sensor of the one or more sensors positioned to receive light that has not travelled through the dimmable element of the augmented-reality glasses; and
actively adjusting a dimming level of the dimmable element based on a comparison between the first and second light information.

15. The head-wearable device of claim 14, wherein:

the dimmable element is a first dimmable element associated with a first lens of the augmented-reality glasses for a first eye of the user;

the augmented-reality glasses also comprise a second dimmable element associated with a second lens of the augmented-reality glasses for a second eye of the user; and
actively adjusting comprises electronically adjusting the dimming level only for the first dimmable element.

Figure 1A

Figure 1B

Figure 2A

Figure 2B

**Figure 2C**

**Figure 2D**

Figure 3A

Figure 3B

Figure 3C

**Figure 4**

EP 4 524 688 A1

~ 500

502 — A user is wearing augmented-reality glasses

504 — Obtain first light information measured via a first sensor positioned to receive light after it travels through a dimmable element of the augmented-reality glasses

506 — Obtain second light information measured via a second sensor positioned to receive light that has not travelled through the dimmable element of the augmented-reality glasses

508 — Actively adjust a dimming level of the dimmable element based on a comparison between the first and second light information

# Figure 5

**Figure 6A**

**Figure 6B**

EP 4 524 688 A1

**Figure 7A**

760

720

Peripherals Interface 761

Sensors 721
Coupling Sensor 762
Imaging Sensor 763
SpO2 Sensor 764
EMG Sensor 765
Capacitive Sensor 766
Heart Rate Sensor 767
IMU 768

NFC 769
GPS 770
LTE 771
WiFi/BT 772
Buttons 773
Display 705
Speaker 774

Microphone 775

Cameras 725
Front Camera 725A
Rear Camera 725B

Haptic Device 776

Controller 777
Haptic Controller 778

Processor(s) 779

Memory 780
Operating System 781
Applications 782
Comm. Interface 783
Graphics 784
Data Management 785
Dimming Ctrl. Module 786A
Data 787
Profile Data 788A
Sensor Data 789A
Media Content Data 790
Application Data 791
Dimming Ctrl. Data 792A

Power System 795
Charger Input 796 ◄► PMIC 797 ◄► Battery 798

710

730

Peripherals Interface 731

Sensors 713
Coup. Sensor 732 | Cap Sensor 736
SpO2 Sensor 734 | HR Sensor 737
EMG Sensor 735 | IMU 738

Display 733 | Speaker 744 | MIC 745
Camera 755

NFC 739
GPS 740
LTE 741
WiFi/BT 742
Buttons 743
Haptic Device 746

Controller 747
Haptic Controller 748

Processor(s) 749

Memory 750
Operating System 751
Comm. Interface 752
Data Management 753
Dimming Ctrl. Module 786B
Data 754
Profile Data 788B
Sensor Data 789B
Dimming Ctrl. Data 792B

Power System 756
Charger Input 757 ◄► PMIC 758 ◄► Battery 759

**Figure 7B**

EP 4 524 688 A1

**Figure 8A**

47

810

812

814

816

848A-1

839B    839C    839A    839D

# Figure 8B-1

839D

816

818

848A-2    890

# Figure 8B-2

**Figure 8C**

800

810

820

890

Peripherals Interface 822A
- Sensors 823A
  - Coupling Sensor 824
  - Acoustic Sensor 825
  - Imaging Sensor 826
  - EMG Sensor 827
  - Capacitive Sensor 828
  - IMU 829
  - Depth Sensor 867
  - Light Sensor 868
- NFC 830
- GPS 831
- LTE 832
- WiFi/BT 833
- Buttons 834
- Display 835A
- Speaker 836A
- Microphone 837A
- Cameras 838A
  - Camera 839-1
  - Camera 839-n
- Haptic Device 840

Controller 846A
- Haptic Controller 847

Processor(s) 848A

Memory 850A
- Operating System 851
- Applications 852
- Comm. Interface 853A
- Graphics 854A
- AR Processing 855A
- Dimming Ctrl. Module 856A
- Data 860
  - Profile Data 861
  - Sensor Data 862
  - Media Content Data 863
  - AR Application Data 864
  - Dimming Ctrl. Data 865

Power System 842A — Charger Input 843 — PMIC 844 — Battery 845

Peripherals Interface 822B
- Sensors 823B
- Camera 838B
- Speaker 836B
- Microphone 837B
- Display 835B

Processor(s) 848B

Controller 846B

Power System 842B

Memory 850B
- Comm. Interface 853B
- Graphics 854B
- AR Processing 855B
- Dimming Ctrl. Mod 856B

Data 860
- Sensor Data 861
- AR App Data 862
- Dimming Ctrl. Data 865

EP 4 524 688 A1

49

# Figure 9A

**Figure 9B**

EP 4 524 688 A1

**EUROPEAN SEARCH REPORT**

Europäisches Patentamt
European Patent Office
Office européen des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2021/350614 A1 (MATHUR VAIBHAV [US] ET AL) 11 November 2021 (2021-11-11) * paragraphs [0006], [0007], [0079], [0131] * | 1-15 | INV. G06F3/01 |
| Y | WO 2019/046334 A1 (PCMS HOLDINGS INC [US]) 7 March 2019 (2019-03-07) * paragraphs [0004], [0062] * | 1-15 | |

**TECHNICAL FIELDS SEARCHED (IPC)**

G06F

The present search report has been drawn up for all claims

| Place of search | Date of completion of the search | Examiner |
|---|---|---|
| Munich | 4 December 2024 | Benzina, Amal |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 8734

This annex lists the patent family members relating to the patent documents cited in the above-mentioned European search report.
The members are as contained in the European Patent Office EDP file on
The European Patent Office is in no way liable for these particulars which are merely given for the purpose of information.

04-12-2024

| Patent document cited in search report | Publication date | Patent family member(s) | Publication date |
|---|---|---|---|
| US 2021350614 A1 | 11-11-2021 | CN 112639579 A | 09-04-2021 |
| | | CN 117238224 A | 15-12-2023 |
| | | EP 3844559 A1 | 07-07-2021 |
| | | EP 4276520 A2 | 15-11-2023 |
| | | JP 2021536592 A | 27-12-2021 |
| | | JP 2024111004 A | 16-08-2024 |
| | | US 2020074724 A1 | 05-03-2020 |
| | | US 2021350614 A1 | 11-11-2021 |
| | | US 2023057556 A1 | 23-02-2023 |
| | | US 2023267677 A1 | 24-08-2023 |
| | | US 2024362856 A1 | 31-10-2024 |
| | | WO 2020047486 A1 | 05-03-2020 |
| WO 2019046334 A1 | 07-03-2019 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63582814